# EUROPEAN PATENT SPECIFICATION

(11) **EP 4 359 822 B1**
(45) Date of publication and mention of the grant of the patent: **09.12.2026**
(21) Application number: 22855373.1
(22) Date of filing: 08.08.2022
(51) Int. Cl.: G01S 17/86, G01C 21/16, G01C 21/20, G01S 17/89, G01S 17/931

(54) **SYSTEMS AND METHODS FOR POSE DETERMINATION OF A MOBILE SUBJECT**
SYSTEME UND VERFAHREN ZUR HALTUNGSBESTIMMUNG EINER MOBILEN PERSON
SYSTÈMES ET PROCÉDÉS DE DÉTERMINATION DE POSE D'UN SUJET MOBILE

(30) Priority: 09.08.2021 CN 202110905399; 09.08.2021 CN 202110905400
(43) Date of publication of application: 01.05.2024
(73) Proprietor: Zhejiang Huaray Technology Co., Ltd., Hangzhou, Zhejiang 310051 (CN)
(72) Inventor: HU, Lizhi, Hangzhou, Zhejiang 310053 (CN); LU, Wei, Hangzhou, Zhejiang 310053 (CN); WANG, Zheng, Hangzhou, Zhejiang 310053 (CN); LI, Ming, Hangzhou, Zhejiang 310053 (CN)
(74) Representative: Wang, Bo
(86) International application number: PCT/CN2022/110811
(87) International publication number: WO 2023/016392

(56) References cited:
- WO-A1-2020/183659
- CN-A- 108 932 736
- CN-A- 111 536 964
- CN-A- 113 359 151
- CN-A- 113 376 650
- US-A1- 2018 075 643
- US-A1- 2018 357 503
- US-A1- 2020 209 365
- US-A1- 2022 137 638

## Description

### TECHNICAL FIELD

The present disclosure generally relates to positioning technology, and in particular, to systems and methods for positioning a mobile subject (e.g., a mobile robot).

### BACKGROUND

Robots are widely used for assisting or replacing the works of humans, such as in the production industry, the construction industry, etc. When a mobile robot performs task operations, such as object handling in a warehouse, the mobile robot usually needs to move in a complex environment. In order to make the mobile robot move from one location point to another location point according to the needs of the task, it needs to accurately know the position and posture of the mobile robot in the current environment, so that the mobile robot can accurately perform tasks. It is desired to provide methods and systems for positioning a mobile subject accurately.

### SUMMARY

An aspect of the present disclosure relates to a method for subject detection according to claim 14.

Another aspect of the present disclosure relates to a system for subject detection according to claim 1.

Still another aspect of the present disclosure relates to a non-transitory computer readable medium according to claim 15.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities, and combinations set forth in the detailed examples discussed below.

### BRIEF DESCRIPTION OF THE DRAWINGS

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:
FIG. 1 is a schematic diagram illustrating an exemplary positioning system according to some embodiments of the present disclosure;
FIG. 2 is a schematic diagram illustrating exemplary hardware and/or software components of an exemplary processing device according to some embodiments of the present disclosure;
FIG. 3 is a schematic diagram illustrating an exemplary structure of a computer-readable storage medium according to some embodiments of the present disclosure;
FIG. 4A is a block diagram illustrating an exemplary processing device according to some embodiments of the present disclosure;
FIG. 4B is a block diagram illustrating another exemplary processing device according to some embodiments of the present disclosure;
FIG. 5 is a flowchart illustrating an exemplary process for positioning a mobile subject according to some embodiments of the present disclosure;
FIG. 6 is a flowchart illustrating an exemplary process for positioning a mobile subject according to some embodiments of the present disclosure;
FIG. 7 is a schematic diagram illustrating an exemplary optimization model according to some embodiments of the present disclosure;
FIG. 8 is a schematic diagram illustrating another exemplary optimization model according to some embodiments of the present disclosure;
FIG. 9 is a schematic diagram illustrating another exemplary optimization model according to some embodiments of the present disclosure;
FIG. 10 is a schematic diagram illustrating another exemplary optimization model according to some embodiments of the present disclosure;
FIG. 11 is a flowchart illustrating an exemplary process for positioning a mobile subject according to some embodiments of the present disclosure;
FIG. 12 is a flowchart illustrating an exemplary process for positioning a mobile subject according to some embodiments of the present disclosure;
FIG. 13 shows a schematic diagram illustrating an exemplary template according to some embodiments of the present disclosure; and
FIG. 14 shows a schematic diagram illustrating another exemplary template according to some embodiments of the present disclosure.

### DETAILED DESCRIPTION

In the following detailed description, numerous specific details are set forth by way of examples in order to provide a thorough understanding of the relevant disclosure. However, it should be apparent to those skilled in the art that the present disclosure may be practiced without such details. In other instances, well-known methods, procedures, systems, components, and/or circuitry have been described at a relatively highlevel, without detail, in order to avoid unnecessarily obscuring aspects of the present disclosure. Various modifications to the disclosed embodiments will be readily apparent to those skilled in the art, and the general principles defined herein may be applied to other embodiments and applications without departing from the spirit and scope of the present disclosure. Thus, the present disclosure is not limited to the embodiments shown, but to be accorded the widest scope consistent with the claims.

It will be understood that the terms "system," "engine," "unit," "module," and/or "block" used herein are one method to distinguish different components, elements, parts, sections, or assemblies of different levels in ascending order. However, the terms may be displaced by other expressions if they may achieve the same purpose.

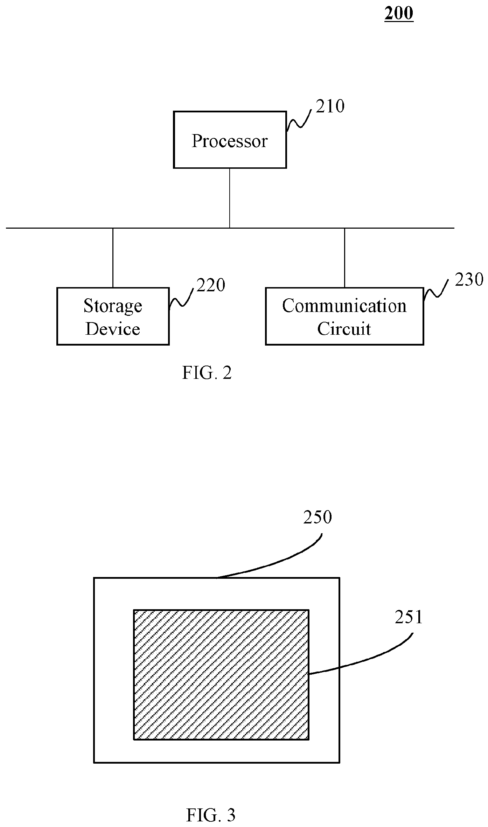

Generally, the words "module," "unit," or "block" used herein, refer to logic embodied in hardware or firmware, or to a collection of software instructions. A module, a unit, or a block described herein may be implemented as software and/or hardware and may be stored in any type of non-transitory computer-readable medium or other storage devices. In some embodiments, a software module/unit/block may be compiled and linked into an executable program. It will be appreciated that software modules can be callable from other modules/units/blocks or from themselves, and/or may be invoked in response to detected events or interrupts. Software modules/units/blocks configured for execution on computing devices (e.g., processor 210 illustrated in FIG. 2) may be provided on a computer-readable medium, such as a compact disc, a digital video disc, a flash drive, a magnetic disc, or any other tangible medium, or as a digital download (and can be originally stored in a compressed or installable format that needs installation, decompression, or decryption prior to execution). Such software code may be stored, partially or fully, on a storage device of the executing computing device, for execution by the computing device. Software instructions may be embedded in firmware, such as an EPROM. It will be further appreciated that hardware modules (or units or blocks) may be included in connected logic components, such as gates and flip-flops, and/or can be included in programmable units, such as programmable gate arrays or processors. The modules (or units or blocks) or computing device functionality described herein may be implemented as software modules (or units or blocks), but may be represented in hardware or firmware. In general, the modules (or units or blocks) described herein refer to logical modules (or units or blocks) that may be combined with other modules (or units or blocks) or divided into sub-modules (or sub-units or sub-blocks) despite their physical organization or storage.

It will be understood that when a unit, an engine, a module, or a block is referred to as being "on," "connected to," or "coupled to" another unit, engine, module, or block, it may be directly on, connected or coupled to, or communicate with the other unit, engine, module, or block, or an intervening unit, engine, module, or block may be present, unless the context clearly indicates otherwise. As used herein, the term "and/or" includes any and all combinations of one or more of the associated listed items.

The terminology used herein is for the purposes of describing particular examples and embodiments only and is not intended to be limiting. As used herein, the singular forms "a," "an," and "the" may be intended to include the plural forms as well, unless the context clearly indicates otherwise. It will be further understood that the terms "include" and/or "comprise," when used in this disclosure, specify the presence of integers, devices, behaviors, stated features, steps, elements, operations, and/or components, but do not exclude the presence or addition of one or more other integers, devices, behaviors, features, steps, elements, operations, components, and/or groups thereof.

In addition, it should be understood that in the description of the present disclosure, the terms "first," "second," or the like, are only used for the purpose of differentiation, and cannot be interpreted as indicating or implying relative importance, nor can be understood as indicating or implying the order.

The flowcharts used in the present disclosure illustrate operations that systems implement according to some embodiments of the present disclosure. It is to be expressly understood, the operations of the flowcharts may be implemented not in order. Conversely, the operations may be implemented in an inverted order, or simultaneously. Moreover, one or more other operations may be added to the flowcharts. One or more operations may be removed from the flowcharts.

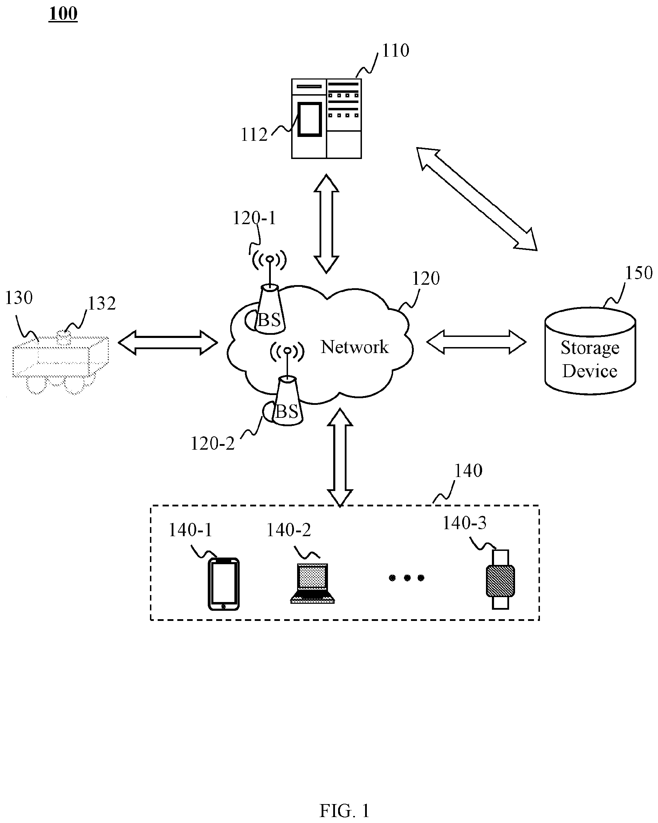

FIG. 1 is a schematic diagram illustrating an exemplary positioning system 100 according to some embodiments of the present disclosure. The positioning system 100 may be applied to a variety of application scenarios for physical distribution, warehouse management, autonomous vehicles, advanced driver assistance systems, robots, intelligent wheelchairs, or the like, or any combination thereof. For illustration, FIG. 1 takes robots as an example.

As shown, the positioning system 100 may include a processing device 110, a network 120, a mobile subject 130, a user device 140, and a storage device 150.

The processing device 110 may be configured to manage resources and processing data and/or information from at least one component or external data source of the positioning system 100. In some embodiments, the processing device 110 may be a single server or a server group. The server group may be centralized or distributed (e.g., the processing device 110 may be a distributed system). In some embodiments, the processing device 110 may be local or remote. For example, the processing device 110 may access information and/or data stored in the mobile subject 130, the user device 140, and/or the storage device 150 via the network 120. As another example, the processing device 110 may be directly connected to the mobile subject 130, the user device 140, and/or the storage device 150 to access stored information and/or data. In some embodiments, the processing device 110 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof. In some embodiments, the processing device 110 may be implemented on a computing device 200 including one or more components illustrated in FIG. 2 of the present disclosure.

In some embodiments, the processing device 110 may process information and/or data relating to positioning to perform one or more functions described in the present disclosure. For example, the processing device 110 may obtain odometer data acquired by an odometer of a mobile subject at a current time, laser data of a scene around the mobile subject acquired, at the current time, by a laser radar of the mobile subject, and a reference map of a region where the scene is located. The processing device 110 may determine a first matching result by matching the reference map with the laser data. The processing device 110 may reconstruct a sub map reflecting the scene based on the laser data and determine a second matching result by matching the sub map with the point cloud data. The processing device 110 may determine a target pose of the mobile subject based on at least one of the odometer data, the first matching result, or the second matching result. As another example, the processing device 110 may obtain reference data of one or more templates and determine, based on a target location point of a mobile subject, a target template from the one or more templates. The processing device 110 may obtain laser data acquired by a target laser radar of the mobile subject scanning the target template, and determine a target pose of the moving location based on the laser data and the reference data of the target template. In some embodiments, the processing device 110 may include one or more processing devices (e.g., single-core processing device(s) or multi-core processor(s)).

In some embodiments, the processing device 110 may be unnecessary and all or part of the functions of the processing device 110 may be implemented by other components (e.g., the mobile subject 130, the user device 140) of the positioning system 100. For example, the processing device 110 may be integrated into the mobile subject 130 and the functions (e.g., determining the detection result of the subject 160) of the processing device 110 may be implemented by the mobile subject 130.

The network 120 may facilitate the exchange of information and/or data for the positioning system 100. In some embodiments, one or more components (e.g., the processing device 110, the mobile subject 130, the user device 140, the storage device 150) of the positioning system 100 may transmit information and/or data to other component(s) of the positioning system 100 via the network 120. For example, the processing device 110 may obtain odometer data and/or laser data from the mobile subject 130 via the network 120. As another example, the processing device 110 may transmit the positioning result of the mobile subject 130 to the user device 140 via the network 120. In some embodiments, the network 120 may be any type of wired or wireless network, or a combination thereof. In some embodiments, the network 120 may be configured to connect to each component of the positioning system 100 and/or connect the positioning system 100 and an external resource portion. The network 120 may be configured to implement communication between components of the positioning system 100 and/or between each component of the positioning system 100 and an external resource portion. In some embodiments, the network 120 may include a wired network, a wireless network, or a combination thereof. In some embodiments, the network 120 may include a point-to-point topology structure, a shared topology structure, a centralized topology structure, or the like, or any combination thereof. In some embodiments, the network 120 may include one or more network access points. For example, the network 120 may include a wired or wireless network access point, such as a base station and/or network exchange points 120-1, 120-2, etc. One or more components of the positioning system 100 may be connected to the network 120 to exchange data and/or information through these network access points.

The mobile subject 130 may be controlled to move in a region (e.g., a warehouse, a supermarket, a hotel, etc.) or environment. For example, the mobile subject 130 may include a vehicle (e.g., an autonomous vehicle), a mobile robot, etc. The mobile subject 130 may be capable of sensing its environment and navigating without human maneuvering. In some embodiments, the mobile subject 130 may include structures, for example, a chassis, a steering device (e.g., a steering wheel), a brake device (e.g., a brake pedal), an accelerator, etc., for movement. In some embodiments, the mobile subject 130 may be a survey vehicle configured for acquiring data for constructing a high-definition map or 3-D city modeling (e.g., a reference map as described elsewhere in the present disclosure). The mobile subject 130 may have a body and at least one wheel. In some embodiments, the mobile subject 130 may include a pair of front wheels and a pair of rear wheels. However, it is contemplated that the mobile subject 130 may have more or fewer wheels or equivalent structures that enable the mobile subject 130 to move around. The mobile subject 130 may be configured to be an all-wheel drive (AWD), front-wheel drive (FWR), or rear-wheel drive (RWD).

As illustrated in FIG. 1, the mobile subject 130 may be equipped with a plurality of sensors 132 mounted to the body of the mobile subject 130 via a mounting structure. The mounting structure may be an electro-mechanical device installed or otherwise attached to the body of the mobile subject 130. In some embodiments, the mounting structure may use screws, adhesives, or another mounting mechanism. The mobile subject 130 may be additionally equipped with the sensors 112 inside or outside the body using any suitable mounting mechanisms.

The sensors 112 may include a camera, a radar unit (e.g., a laser radar (LiDAR), a millimeter-wave radar, etc.), a GPS device, an inertial measurement unit (IMU) sensor, an odometer, or the like, or any combination thereof. The radar unit may represent a system that utilizes radio signals (e.g., laser beams) to sense objects within the local environment of the mobile subject 130. In some embodiments, in addition to sensing the objects, the radar unit may additionally be configured to sense the speed and/or heading of the objects. The camera may include one or more devices configured to capture a plurality of images of the environment surrounding the mobile subject 130. The camera may be a still camera or a video camera. The GPS device may refer to a device that is capable of receiving geolocation and time information from GPS satellites and then calculating the device's geographical position. The IMU sensor may refer to an electronic device that measures and provides a vehicle's specific force, angular rate, and sometimes the magnetic field surrounding the vehicle, using various inertial sensors, such as accelerometers and gyroscopes, sometimes also magnetometers. The IMU sensor may be configured to sense position and orientation changes of the mobile subject 130 based on various inertial sensors. By combining the GPS device and the IMU sensor, the sensor 132 can provide real-time pose information of the mobile subject 130 as it travels, including the positions and orientations (e.g., Euler angles) of the mobile subject 130 at each time point. The LiDAR may be configured to scan the surroundings and generate point-cloud data. The LiDAR may measure a distance to an object by illuminating the object with pulsed laser light and measuring the reflected pulses with a receiver. Differences in laser return times and wavelengths may then be used to make digital 3-D representations of the object. The light used for LiDAR scan may be ultraviolet, visible, near infrared, etc. Because a narrow laser beam may map physical features with very high resolution, the LiDAR may be particularly suitable for high-definition map surveys. The camera may be configured to obtain one or more images relating to objects (e.g., a person, an animal, a tree, a roadblock, a building, or a vehicle) that are within the scope of the camera. Consistent with the present disclosure, the sensors 132 may take measurements of pose information at the same time point where the sensors 132 captures the point cloud data. Accordingly, the pose information may be associated with the respective point cloud data. In some embodiments, the combination of point cloud data and its associated pose information may be used to position the mobile subject 130.

The user device 140 may be configured to receive information and/or data from the processing device 110, the mobile subject 130, and/or the storage device 150, via the network 120. For example, the user device 140 may receive a positioning result from the processing device 110. In some embodiments, the user device 140 may process information and/or data received from the processing device 110, the mobile subject 130, and/or the storage device 150, via the network 120. In some embodiments, the user device 140 may provide a user interface via which a user may view information and/or input data and/or instructions to the positioning system 100. For example, the user may view the target pose of the mobile subject 130 via the user interface. As another example, the user may input an instruction associated with the positioning via the user interface. In some embodiments, the user device 140 may include a mobile phone 140-1, a computer 140-2, a wearable device 140-3, or the like, or any combination thereof. In some embodiments, the user device 140 may include a display that can display information in a human-readable form, such as text, image, audio, video, graph, animation, or the like, or any combination thereof. The display of the user device 140 may include a cathode ray tube (CRT) display, a liquid crystal display (LCD), a light-emitting diode (LED) display, a plasma display panel (PDP), a three-dimensional (3D) display, or the like, or a combination thereof.

The storage device 150 may be configured to store data and/or instructions. The data and/or instructions may be obtained from, for example, the processing device 110, the mobile subject 130, and/or any other component of the positioning system 100. In some embodiments, the storage device 150 may store data and/or instructions that the processing device 110 may execute or use to perform exemplary methods described in the present disclosure. In some embodiments, the storage device 150 may include mass storage, removable storage, a volatile read-and-write memory, a read-only memory (ROM), or the like, or any combination thereof. In some embodiments, the storage device 150 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

In some embodiments, the storage device 150 may be connected to the network 120 to communicate with one or more components (e.g., the processing device 110, the mobile subject 130, the user device 140) of the positioning system 100. One or more components of the positioning system 100 may access the data or instructions stored in the storage device 150 via the network 120. In some embodiments, the storage device 150 may be directly connected to or communicate with one or more components (e.g., the processing device 110, the mobile subject 130, the user device 140) of the positioning system 100. In some embodiments, the storage device 150 may be part of other components of the positioning system 100, such as the processing device 110, the mobile subject 130, or the user device 140.

It should be noted that the above description is merely provided for the purposes of illustration, and is not intended to limit the scope of the present disclosure. For persons having ordinary skills in the art, multiple variations and modifications may be made under the teachings of the present disclosure. However, those variations and modifications do not depart from the scope of the present disclosure.

FIG. 2 is a schematic diagram illustrating exemplary hardware and/or software components of an exemplary computing device 200 according to some embodiments of the present disclosure. In some embodiments, the processing device 110 may be implemented on the computing device 200. For example, the processing device 110 may be implemented on the computing device 200 and configured to perform methods as disclosed in this disclosure. It should be noted that the description of the computing device 200 in FIG. 2 is intended to be illustrative, and not to limit the scope of the present disclosure. For example, the detection device 200 may be any device with an image processing function, such as a mobile phone, a desktop computer, a tablet computer, etc., which is not limited herein.

As illustrated in FIG. 2, the computing device 200 may include at least one processor 210, at least one storage device 220, a communication circuit 230, or the like, or any combination thereof.

The communication circuit 230 may be configured to connect other components in the computing device 200 (e.g., the processors 210, the storage device 220, etc.). The communication circuit 230 may represent one or more bus structures. Exemplary bus structures may include a memory bus, a memory controller, a peripheral bus, a graphical acceleration port, a processor, or a local bus that uses any of several bus structures. For example, these bus structures may include an industry standards architecture (ISA) bus, a microchannel architecture (MAC) bus, an enhanced ISA bus, a video electronics standards association (VESA) local bus, a peripheral component interconnection (PCI) bus, or the like, or any combination thereof.

The at least one processor 210 may execute computer instructions (e.g., program codes) and perform functions of the processing device 110 in accordance with techniques described herein. The computer instructions may include, for example, routines, programs, objects, components, data structures, procedures, modules, etc., which perform particular functions described herein. For example, the at least one processor 210 may process data obtained from the processing device 110, the mobile subject 130, the user device 140, the storage device 150, and/or any other component of the positioning system 100.

Merely for illustration, only one processor is described in the computing device 200. However, it should be noted that the computing device 200 in the present disclosure may also include multiple processors, thus operations and/or method steps that are performed by one processor as described in the present disclosure may also be jointly or separately performed by the multiple processors. For example, if in the present disclosure the processor of the computing device 200 executes both operation A and operation B, it should be understood that operation A and operation B may also be performed by two or more different processors jointly or separately in the computing device 200 (e.g., a first processor executes operation A and a second processor executes operation B, or the first and second processors jointly execute operations A and B).

The at least one storage device 220 may store data/information obtained from the processing device 110, the mobile subject 130, the user device 140, the storage device 150, and/or any other component of the positioning system 100. The storage device 220 may include a computer readable medium in the form of a volatile memory, such as a random access memory (RAM), a cache memory, and/or a read-only memory (ROM). In some embodiments, the at least one storage device 220 may include a program/utility including at least one set of program modules. Such a program module may include an operating system, one or more applications, other program modules, program data, etc. Each or some combination of these embodiments may include an implementation of a network environment. The program module may perform functions and/or methods described in the embodiments of the present disclosure.

The computing device 200 may communicate with one or more external devices (e.g., a keyboard, a pointing device, a display, etc.). The computing device 200 may communicate with one or more devices that enable a user to interact with the computing device 200, and/or with any device (e.g., a network card, a modem, etc.) that enables the computing device 200 to communicate with one or more other computing devices. The communication may be performed through an input/output (I/O) interface. In addition, the computing device 200 may also communicate with one or more networks (e.g., a local area network (LAN), a wide area network (WAN), and/or a public network, such as the Internet) through a network adapter. It should be noted that, although not shown in FIG. 2, other hardware and/or software modules may be used in accordance with the computing device 200. The hardware and/or software modules may include, but not be limited to, a microcode, a device driver, a redundant processing unit, a drive array of external disks, a redundant array of independent disks (RAID) system, a tape drive, a data backup storage device, or the like, or any combination thereof. It may be considered that those skilled in the art may also be familiar with such structures, programs, or general operations of this type of computing device.

FIG. 3 is a schematic diagram illustrating an exemplary structure of a computer-readable storage medium according to some embodiments of the present disclosure. The computer-readable storage medium 250 may store a computer program 251. The computer program 251 may be executed by a processor to implement the operations in any of the methods disclosed in the present disclosure.

The computer-readable storage medium 250 may include a U disk, a mobile hard disk, a read-only memory (ROM), a random access memory (RAM), a magnetic disk, an optical disk, or the like, or any combination thereof, which may store the computer program 251. The computer-readable storage medium 250 may also include a server storing the computer program 251. In some embodiments, the computer-readable storage medium 250 may send the stored computer program 251 to other devices to execute. Alternatively, the computer-readable storage medium 250 may execute the stored computer program 251.

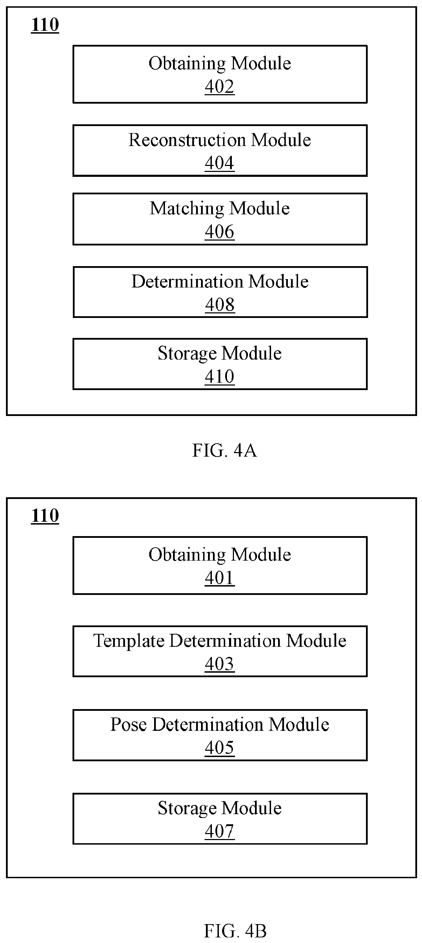

FIG. 4A is a block diagram illustrating an exemplary processing device according to some embodiments of the present disclosure. The processing device 110 may include an obtaining module 402, a reconstruction module 404, a matching module 406, a determination module 408, and a storage module 410. The processing device 110 may be configured to perform processes as described in the present disclosure, e.g., process 500 and 600.

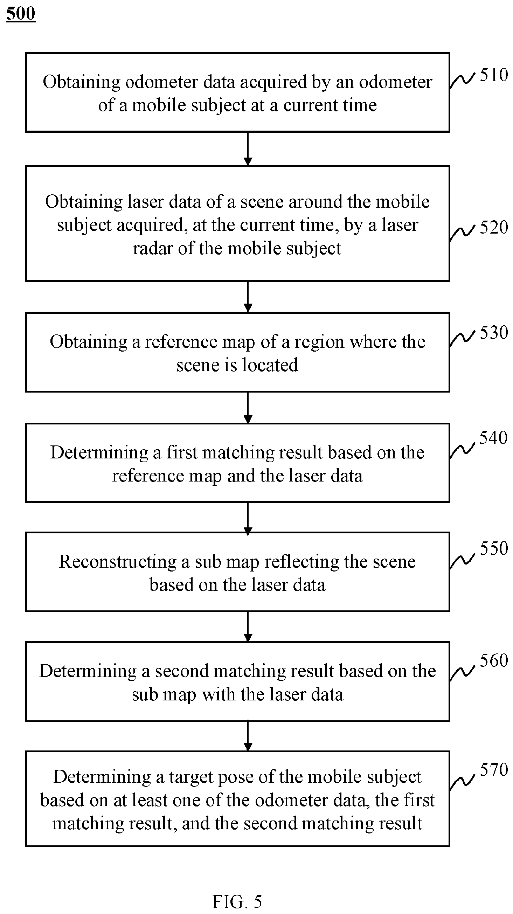

The obtaining module 402 may be configured to obtain information and/or data associated with the positioning system 100. For example, the obtaining module 402 may obtain odometer data acquired by an odometer of a mobile subject at a current time, laser data of a scene around the mobile subject acquired, at the current time, by a laser radar of the mobile subject, and/or a reference map of a region where the scene is located. More descriptions regarding the obtaining of the odometer data, the laser data, and/or the reference map may be found elsewhere in the present disclosure, for example, operations 510-530 in FIG. 5 and relevant descriptions thereof.

The reconstruction module 404 may be configured to reconstruct one or more maps. For example, the reconstruction module 404 may be configured to reconstruct the reference map of a region (e.g., a warehouse). As another example, the reconstruction module 404 may be configured to reconstruct a sub map reflecting a scene in a region based on the laser data acquired by a laser radar via scanning the scene. More descriptions regarding reconstructing the reference map and the sub map may be found elsewhere in the present disclosure, for example, operations 530 and 550 in FIG. 5 and relevant descriptions thereof.

The matching module 406 may be configured to obtain a first matching result between the reference map and the laser data and/or a second matching result between the sub map and the laser data. More descriptions regarding reconstructing the reference map and the sub map may be found elsewhere in the present disclosure, for example, operations 540 and 560 in FIG. 5 and relevant descriptions thereof.

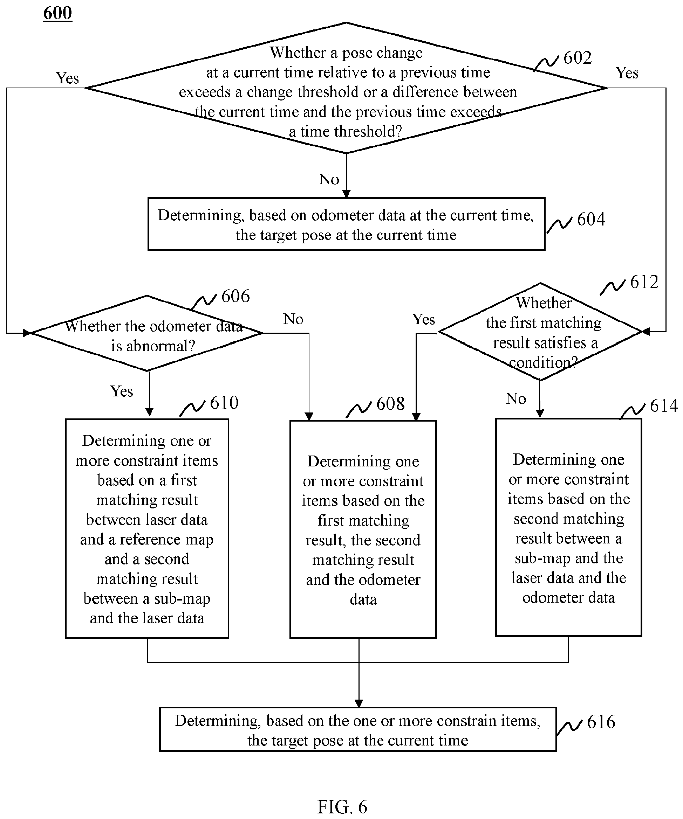

The determination module 408 may be configured to determine a pose of the mobile subject based on at least one of the odometer data, the first matching result, and the second matching result. More descriptions regarding determining a pose of the mobile subject based on at least one of the odometer data, the first matching result, and the second matching result may be found elsewhere in the present disclosure, for example, operation 570 in FIG. 5 and process 600 in FIG. 6 and relevant descriptions thereof.

The storage module 410 may be configured to store information generated by one or more components of the processing device 110. For example, the storage module 410 may store the one or more matching algorithms used by the matching module 406. As another example, the storage module 410 may store the reference map, the sub map, the first matching result, the second matching result, and/or the odometer data generated in the positioning of the mobile subject.

FIG. 4B is a block diagram illustrating an exemplary processing device according to some embodiments of the present disclosure. The processing device 110 may include an obtaining module 401, the template determination module 403, a pose determination module 405, and a storage module 407. The processing device 110 may be configured to perform processes as described in the present disclosure, e.g., process 1100 and 1200.

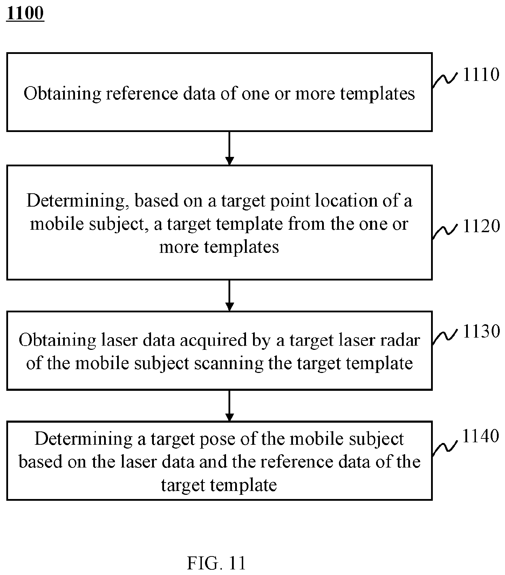

The obtaining module 401 may obtain reference data of one or more templates and/or laser data of one of the one or more templates. More descriptions regarding the obtaining of the reference data of one or more templates and/or laser data of one of the one or more templates may be found elsewhere in the present disclosure, for example, operation 1110 in FIG. 11 and relevant descriptions thereof.

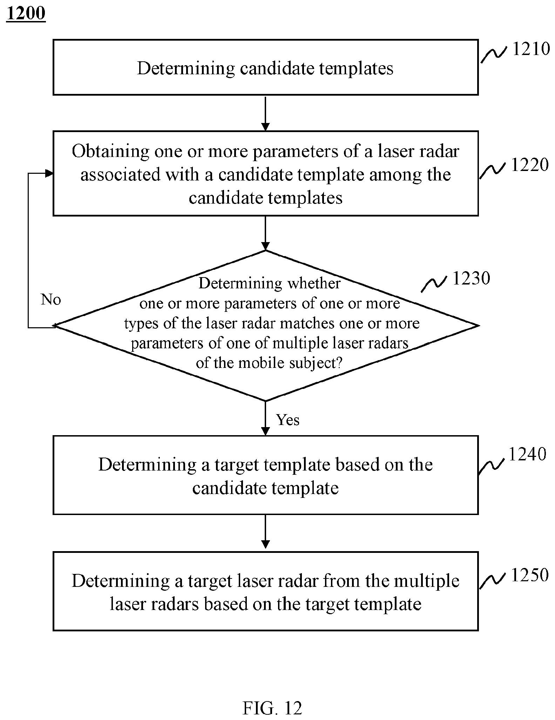

The template determination module 403 may be configured to determine a target template from the one or more templates obtained by the obtaining module 401. More descriptions regarding determining a target template may be found elsewhere in the present disclosure, for example, operation 1120 in FIG. 11 and FIG. 12 and relevant descriptions thereof.

The pose determination module 405 may be configured to determine a target pose of a mobile subject based on laser data and the reference data of the target template. The laser data of the target template may be acquired by a target laser radar of the mobile subject. In some embodiments, the template determination module 403 or the pose determination module 405 may determine the target laser radar based on the target template. More descriptions regarding determining a target laser radar or the target pose of a mobile subject may be found elsewhere in the present disclosure, for example, operation 1140 in FIG. 11 and FIG. 12 and relevant descriptions thereof.

The storage module 407 may be configured to store information generated by one or more components of the processing device 110. For example, the storage module 407 may store the one or more matching algorithms used by the pose determination module 405. As another example, the storage module 407 may store the reference data of multiple templates for the positioning of the mobile subject.

The modules in the processing device 110 may be connected to or communicate with each other via a wired connection or a wireless connection. The wired connection may include a metal cable, an optical cable, a hybrid cable, the like, or any combination thereof. The wireless connection may include a Local Area Network (LAN), a Wide Area Network (WAN), Bluetooth, a ZigBee, a Near Field Communication (NFC), or the like, or any combination thereof. In some embodiments, two or more of the modules may be combined as a single module, and any one of the modules may be divided into two or more units.

FIG. 5 is a flowchart illustrating an exemplary process for positioning a mobile subject according to some embodiments of the present disclosure. In some embodiments, process 500 may be executed by the positioning system 100. For example, process 500 may be implemented as a set of instructions (e.g., an application) stored in a storage device (e.g., the storage device 150, the storage device 220). In some embodiments, the processing device 110 (e.g., the processor 210 of the computing device 200, and/or one or more modules illustrated in FIG. 4A) may execute the set of instructions and may accordingly be directed to perform the process 500. The operations of the illustrated process presented below are intended to be illustrative. In some embodiments, process 500 may be accomplished with one or more additional operations not described and/or without one or more of the operations discussed. Additionally, the order of the operations of process 500 illustrated in FIG. 5 and described below is not intended to be limiting. As used herein, positioning a mobile subject may include determining the pose of the mobile subject. The pose of a mobile subject may include a location and/or a posture of the mobile subject.

In 510, the processing device 110 (e.g., the obtaining module 402) may obtain odometer data acquired by an odometer of a mobile subject at a current time.

The mobile subject may include a subject that can move in an environment. For example, the mobile subject may include a vehicle, a mobile robot, etc. The mobile subject may be provided with multiple sensors, such as an encoder, a GPS receiver, a laser radar, an inertial measurement unit (IMU), etc. More descriptions for the mobile subject may be found elsewhere in the present disclosure (e.g., FIG. 1).

The odometer may include an encoder (e.g., a wheel encoder). The odometer may be configured to determine, based on data acquired by the encoder, the change of a pose (i.e., pose change) of the mobile subject with time to obtain the odometer data. For example, the odometer may determine the pose change of the mobile subject with time based on data acquired by the encoder (e.g., a wheel encoder).

The odometer data at the current time may be determined based on data acquired by a sensor (e.g., the encoder) during a time period between the previous time (also referred to as a first previous time) and the current time.

The odometer data may include one or more pose changes (also referred to as estimated third pose change) of the mobile subject during the time period from the previous time to the current time. For example, the odometer data may include multiple pose changes at different time points (also referred to as third time points) in the time period from the previous time to the current time. Each of the third time points may correspond to a timestamp (also referred to as third timestamp). The odometer data may include the multiple pose changes at different time points and the third timestamps each of which corresponds to one of the multiple pose changes. In some embodiments, the last third timestamp of the odometer data acquired during the time period may correspond to a third time point that is the same as the current time. In some embodiments, the last third timestamp of the odometer data acquired during the time period may correspond to a third time point that is closest to but different from the current time.

A pose change may include a location change and a direction change. The location change may include a moving distance change. The direction change data may include an azimuth change.

In some embodiments, the processing device 110 may obtain the odometer data from the odometer. In some embodiments, the odometer may determine the odometer data and store the odometer data in storage (e.g., the storage device 130, the storage module 450, etc.), and the processing device 110 may obtain the odometer data from the storage.

In 520, the processing device 110 (e.g., the obtaining module 402, the first feature obtaining module 412) may obtain laser data of a scene around the mobile subject acquired, at the current time, by a laser radar of the mobile subject.

The laser data may be generated by the laser radar via emitting lasers to scan objects in the scene. The laser data may reflect distance information between the laser radar and objects that reflects lasers emitted by the laser radar. In some embodiments, the laser data may include data acquired by the laser radar scanning the scene. In some embodiments, the laser data may include point cloud data. The point cloud data may be generated by processing the data acquired by the laser radar scanning the scene. The point cloud data may represent the position information (e.g., 3D coordinates) of the objects in the scene.

The laser data acquired at the current time may include the data or the point cloud data determined based on the data acquired by the laser radar during the time period between the previous time and the current time. The laser data may include multiple frames acquired by the laser data during the time period between the previous time and the current time. Each of the multiple frames may correspond to a timestamp indicating a time point that the frame is acquired by the laser radar. In some embodiments, a timestamp of the last frame of the laser data acquired during the time period may correspond to a time point that is the same as the current time. In some embodiments, a timestamp of the last frame of the laser data acquired during the time period may correspond to a time point that is closest to but different from the current time.

In some embodiments, the multiple frames may include one or more keyframes. One or more keyframes may be determined based on a keyframe extraction algorithm, such as a motion analysis-based extraction algorithm, a clustering algorithm, etc.

In some embodiments, the processing device 110 may obtain the laser data from the laser radar. In some embodiments, the laser radar may acquire the laser data and store the laser data in storage (e.g., the storage device 130, the storage module 450, etc.), and the processing device 110 may obtain the laser data from the storage.

In 530, the processing device 110 (e.g., the obtaining module 402 or the reconstruction module 404) may obtain a reference map of a region where the scene is located.

The reference map may also be referred to as a prior map. In some embodiments, the region may be or be in a warehouse, a building, etc. The reference map may present position information of objects (e.g., original objects) or different portions thereof in the region.

The reference map may be established based on a simultaneous localization and mapping (SLAM) algorithm, a truncated signed distance function (TSDF) algorithm, etc. In some embodiments, the reference map may include a probability grid map, a distance map, etc. The probability grid map may represent multiple grids and objects in the region. The distance map may include distances each of which is between one of the multiple grids and an object that is closest to the grid. If an object is located at a grid, the distance between the grid and the object may be zero.

In some embodiments, the reference map may be stored in storage (e.g., the storage device, the storage module 450). The processing device 110 may obtain the reference map from the storage. In some embodiments, the reference map may include a high-definition map of the region that is constructed based on data acquired by a survey subject (e.g., a survey vehicle). In some embodiments, the processing device 110 may establish the reference map according to an algorithm as described above.

In 540, the processing device 110 (e.g., the matching module 406) may determine a first matching result based on the reference map and the laser data.

The first matching result may also be referred to as a global matching result. In some embodiments, the first matching result may include estimated first poses of the mobile subject at one or more first time points in the time period. For example, the first matching result may include an estimated first pose at the previous time and an estimated first pose at the current time. In some embodiments, the first matching result may include an estimated first pose change of the mobile subject each of which is at a first time point in the time period relative to a previous first time point. For example, the first matching result may include an estimated first pose change at the current time relative to the previous time.

In some embodiments, the processing device 110 may determine the first matching result by matching the reference map with at least a portion of the laser data. In some embodiments, the processing device 110 may match at least a portion of the laser data with the reference map using a matching algorithm (also referred to as a registration algorithm or a scan-to-map algorithm, e.g., coarse registration algorithms, fine registration algorithms). Exemplary coarse registration algorithms may include a Normal Distribution Transform (NDT) algorithm, a 4-Points Congruent Sets (4PCS) algorithm, a Super 4PCS (Super-4PCS) algorithm, a Semantic Keypoint 4PCS (SK-4PCS) algorithm, a Generalized 4PCS (Generalized-4PCS) algorithm, or the like, or any combination thereof. Exemplary fine registration algorithms may include an Iterative Closest Point (ICP) algorithm, a Normal IPC (NIPC) algorithm, a Generalized-ICP (GICP) algorithm, a Discriminative Optimization (DO) algorithm, a Soft Outlier Rejection algorithm, a KD-tree Approximation algorithm, or the like, or any combination thereof. such as an ICP algorithm, a point-based probabilistic registration algorithm, an NDT algorithm, a feature-based matching algorithm, etc.

In some embodiments, the processing device 110 may determine the first portion of the laser data from the laser data and match the first portion of the laser data with the reference map to determine the first matching result. The first portion of the laser data may represent one or more original objects in the reference map and be generated based on laser beams reflected by the one or more original objects. The feature data representing the original objects and being extracted from the first portion of the laser data also be referred to as long-term feature data. The processing device 110 may generate the first matching result by matching the long-term feature data with the reference map. For example, the first portion of the laser data may include first frames each of which corresponds to a first timestamp indicating a first time point when the first frame is acquired by the laser radar. The processing device 12 may extract the long-term feature data from each of the first frames of the laser data. The first matching result may include estimated first poses at first time points determined by matching the first frames and the reference map. Each of the estimated first poses at a first time point may be generated by matching the reference map with a first frame with a first timestamp indicating the first time point. In other words, each of the estimated first poses may correspond to a first timepoint and a first frame having a first timestamp indicating the first timepoint. In some embodiments, the first portion of the laser data may include all the laser data. For example, the first portion of the laser data may include all the multiple frames.

In some embodiments, the processing device 110 may determine the first portion of the laser data based on the reference map. For example, for a specific frame of the laser data, the processing device 110 may determine a distance between an object detected by a laser beam and represented in the specific frame and a grid in the reference map that is closest to the object. If the distance is less than a threshold, laser data (i.e., the specific frame) generated based on the laser beam and representing the object may be designated as the first portion of the laser data (where the long-term feature data may be extracted from); if the distance exceeds the threshold, laser data (i.e., the specific frame) generated based on the laser beam and representing the object may be designated as a second portion of the laser data (where short-term feature data may be extracted from). The second portion of the laser data may represent one or more new objects who are not represented in the reference map and be generated based on laser beams reflected by the one or more new objects. The short-term feature data representing the new objects may be extracted from the second portion of the laser data. The second portion of the laser data may include second frames.

The distance between an object detected by a laser beam (denoted as *k*) and a grid in the reference map that is closest to the object may be determined based on the coordinates of the object in a world coordinate system and the coordinates of the grid in the reference map (i.e., in the world coordinate system). The coordinates of the object in the world coordinate system may be determined according to Equation (1) as follows: $\left(\begin{matrix}{x}_{{z}_{t}^{k}} \\ {y}_{{z}_{t}^{k}}\end{matrix}\right) = \left(\begin{matrix}x \\ y\end{matrix}\right) + \left(\begin{matrix}cos θ & - sin θ \\ sin θ & cos θ\end{matrix}\right) \left(\begin{matrix}{x}_{k , sens} \\ {y}_{k , sens}\end{matrix}\right) + {z}_{t}^{k} \left(\begin{matrix}cos \left(θ+{θ}_{k , sens}\right) \\ sin \left(θ+{θ}_{k , sens}\right)\end{matrix}\right) ,$ (1) where ${\left({x}_{{z}_{t}^{k}}{y}_{{z}_{t}^{k}}\right)}^{T}$ refers to the coordinates of an object detected by a laser beam in the world coordinate system, ${\left[{x}_{k , sens} {y}_{k , sens} {θ}_{k , sens}\right]}^{T}$ refers to coordinates of an object detected by a laser beam in a coordinate system of the laser radar or the mobile subject, *xₜ* = [*x y θ*]*^{T}* refers to an estimated pose of the mobile subject determined based on the odometer data, and ${z}_{t}^{k}$ refers to a distance between the object detected by the laser beam and the laser radar, which is included in the laser data generated as the laser beam, i.e., a distance between the laser beam and the laser radar when the laser beams irradiates the object.

It should be noted that a frame may include both an original object and a new object, the frame may be considered a first frame, and the frame may also be considered a second frame. In other words, in some embodiments, the first frames in the first portion of the laser data and the second frames in the second portion of the laser data may have one or more same frames.

In 550, the processing device 110 (e.g., the reconstruction module 404) may reconstruct a sub map reflecting the scene based on the laser data.

The sub map may represent position information of new objects and/or original objects in the scene. In some embodiments, the sub map may be established based on the laser data using a simultaneous localization and mapping (SLAM) algorithm, a truncated signed distance function (TSDF) algorithm, etc.

In 560, the processing device 110 (e.g., the matching module 406) may determine a second matching result based on the sub map and the laser data.

As used herein, the matching between the sub map and the laser data may also be referred to as a construction of a virtual odometer or a simulated odometer (also referred to as a laser odometer or an odometer model).

The second matching result may also be referred to as a local matching result. In some embodiments, the second matching result may include estimated second poses of the mobile subject at one or more time points (e.g., the second previous time, the current time) in the time period. For example, the second matching result may include an estimated second pose at the previous time and an estimated second pose at the current time. In some embodiments, the second matching result may include an estimated second pose change of the mobile subject each of which is at a second time point in the time period relative to a previous second time point. For example, the second matching result may include an estimated second pose change at the current time relative to the previous time.

The processing device 110 may determine the second matching result by matching at least a portion of the laser data with the sub map using a matching algorithm as described elsewhere in the present disclosure.

In some embodiments, the processing device 110 may determine the second matching result by matching the reference map with the second portion of the laser data. The second portion of the laser data may be obtained as described in operation 540. For example, the processing device 110 may extract the short-term feature data representing the original objects from the second portion of the laser data. The processing device 110 may generate the second matching result by matching the short-term feature data with the sub map. As a further example, the second portion of the laser data may include second frames each of which corresponds to a second timestamp indicating a second time point when the second frame is acquired by the laser radar. The processing device 12 may extract the short-term feature data from each of the second frames of the laser data. The second matching result may include estimated second poses at second time points determined by matching the second frames and the reference map. Each of the estimated second poses at a second time point may be generated by matching the reference map with a second frame with a second timestamp indicating the second time point. In other words, each of the estimated second poses may correspond to a second timepoint and a second frame having a second timestamp indicated the second timepoint. In some embodiments, the second portion of the laser data may include all the laser data. For example, the second portion of the laser data may include all the multiple frames.

In some embodiments, the first frames may be the same as the second frames. At the same time point during the time period, an estimated first pose and an estimated second pose may be obtained based on the same frame with the timestamp indicating the same time point.

In some embodiments, the processing device 110 may determine the second matching result by matching the short-term feature data and the long-term feature data with the reference map. The short-term feature data and the long-term feature data may be extracted from the same frame. For example, the processing device 110 may match long-term feature data and short-term feature data in each frame that includes an original object and a new object with the reference map to obtain the second matching result.

In 570, the processing device 110 (e.g., the determination 408) may determine a target pose of the mobile subject based on at least one of the odometer data, the first matching result, or the second matching result.

In some embodiments, the processing device 110 may determine whether a pose change at the current time relative to the previous time exceeds a change threshold based on the odometer data or a difference between the current time and the previous time exceeds a time threshold. In response to determining that the pose change does not exceed the change threshold based on the odometer data and the difference between the current time and the previous time does not exceed the time threshold, the processing device 110 may determine the target pose at the current time based on the odometer data. For example, the processing device 110 may determine the target pose at the current time based on the odometer data and a target pose of the mobile subject at the previous time using a moving model. As another example, the processing device 110 may determine the target pose at the current time based on the odometer data and at least one of the GPS data or IMU data. More descriptions for determining the target pose at the current time based on the odometer data may be found elsewhere in the present disclosure. See, e.g., process 600 as illustrated in FIG. 6.

In response to determining that the pose change exceeds the change threshold based on the odometer data or the difference between the current time and the previous time exceeds the time threshold, the processing device 110 may determine the target pose at the current time based on the at least two of the odometer data, the first matching result, or the second matching result.

For example, the processing device 110 may determine one or more constraint items configured to constrain an error between an actual pose (i.e., a pose that is to determined or optimized) and an estimated pose at a time point (e.g., the current time, a first time point, or a second time point closest to the current time) and/or an error between an actual pose change (i.e., a pose change that is to determined or optimized or determined based on the actual pose) and an estimated pose change at the time point (e.g., the current time, a first time point or a second time point closest to the current time) relative to a previous time point (e.g., the previous time, a previous first time point or a previous second time point). The processing device 110 may determine, based on the one or more constraint items, the target pose at the current time. The processing device 110 may determine the target pose based on the one or more constraint items using an optimization algorithm. Exemplary optimization algorithms may include a linear optimization algorithm, a nonlinear optimization algorithm (e.g., a gradient descent optimization algorithm, a Newton optimization algorithm, etc.), a Gauss-Newton equation optimization algorithm, a Levenberg-Marquardt optimization algorithm, an iterative nonlinear least square optimization algorithm, or the like, or a combination thereof. In some embodiments, the actual pose may refer to an absolute optimization variable in an optimization process using the one or more constraint items; the actual pose change may refer to a relative optimization variable in an optimization process using the one or more constraint items. After the optimization process is completed, the actual pose and/or the actual pose change (i.e., optimization variables) may be obtained or determined.

The estimated pose and the estimated pose change may be determined based on at least one of the odometer data, the first matching result, and the second matching result. For example, the estimated pose may include an estimated first pose in the first matching result, an estimated second pose in the second matching result, and/or an estimated third pose determined based on the odometer data. The estimated pose change may include an estimated first pose change determined based on the first matching result, an estimated second pose change determined based on the second matching result, and/or an estimated pose change determined based on or in the odometer data.

In some embodiments, an error between an actual pose and an estimated pose may be constructed based on a difference between the actual pose and the estimated pose. In some embodiments, an error between an actual pose and an estimated pose may be constructed based on a difference between a weighted actual pose by weighting the actual pose and a weighted estimated pose by weighting the estimated pose.

n some embodiments, an error between an actual pose change and an estimated pose change may be constructed based on a difference between the actual pose change and the estimated pose change. In some embodiments, an error between an actual pose change and an estimated pose change may be constructed based on a difference between a weighted actual pose change by weighting the actual pose change and a weighted estimated pose by weighting the estimated pose change.

In some embodiments, the processing device 110 may determine whether the odometer data is abnormal. And in response to determining that the odometer data is abnormal, the processing device 110 may determine that the one or more constraint items are constructed based on the first matching result and the second matching result; in response to determining that the odometer data is not abnormal, the processing device 110 may determine that the one or more constraint items are constructed based on the odometer data, the first matching result, and the second matching result.

In some embodiments, the processing device 110 may determine whether the first matching result satisfies a condition. And in response to determining that the first matching result satisfies the condition, the processing device 110 may determine that the one or more constraint items are constructed based on the second matching result and the odometer data; in response to determining that the first matching result does not satisfy the condition, the processing device 110 may determine that the one or more constraint items are constructed based on the odometer data, the first matching result, and the second matching result.

In some embodiments, the processing device 110 may determine whether the first matching result satisfies a condition and whether the odometer data is abnormal. In response to determining that the first matching result satisfies the condition and the odometer data is abnormal, the processing device 110 may determine that the one or more constraint items are constructed based on the second matching result. More descriptions for determining the target pose may be found elsewhere in the present disclosure (e.g., FIG. 6 and the descriptions thereof).

According to some embodiments of the present disclosure, the system may determine a target pose by fusing the odometer data, the first matching result between the laser data and the reference map, and the second matching result between the laser data and the sub map, which may improve the robustness and accuracy of the positioning. In addition, the system may reconstruct a sub map that reflects the real-time change of the environment and determine the target pose of the mobile subject based on the sub map, which may improve the robustness and accuracy of the positioning. Further, the system may determine the first matching result by matching the long-term feature data in the laser data with the reference map, which improves the accuracy of the first matching result, thereby improving the accuracy of positioning.

It should be noted that the above description is merely provided for the purposes of illustration, and is not intended to limit the scope of the present disclosure. For persons having ordinary skills in the art, multiple variations or modifications may be made under the teachings of the present disclosure. However, those variations and modifications do not depart from the scope of the present disclosure. For example, operation 520 and operation 530 may be performed simultaneously. Alternatively, operation 530 may be performed before operation 520.

FIG. 6 is a flowchart illustrating an exemplary process for positioning a mobile subject according to some embodiments of the present disclosure. In some embodiments, process 600 may be executed by the positioning system 100. For example, process 600 may be implemented as a set of instructions (e.g., an application) stored in a storage device (e.g., the storage device 150, the storage device 220). In some embodiments, the processing device 110 (e.g., the processor 210 of the computing device 200, and/or one or more modules (e.g., the determination module 408 illustrated in FIG. 4A) may execute the set of instructions and may accordingly be directed to perform the process 600. The operations of the illustrated process presented below are intended to be illustrative. In some embodiments, the process 600 may be accomplished with one or more additional operations not described and/or without one or more of the operations discussed. Additionally, the order of the operations of process 600 illustrated in FIG. 6 and described below is not intended to be limiting. In some embodiments, operation 570 may be performed according to process 600 as illustrated in FIG. 6. In some embodiments, process 600 may be performed by another device or system other than the system 100, e.g., a device or system of a vendor of a manufacturer. For illustration purposes, the implementation of process 600 by the processing device 110 is described as an example.

In 602, the processing device 110 (e.g., the determination module 408) may determine whether a pose change at a current time relative to a previous time exceeds a change threshold based on odometer data or a difference between the current time and the previous time exceeds a time threshold.

The pose change at the current time relative to the previous time may be determined or included in the odometer data. The pose change may include a distance change and/or an angle change of a mobile subject from the previous time to the current time. The distance change may also be referred to as the moving distance of the mobile subject from the previous time to the current time. The pose change at the current time relative to the previous time exceeding the change threshold may include at least one of the distance change or the angle change exceeding a threshold (e.g., a distance threshold, e.g., 5 centimeters, 10 centimeters, 20 centimeters, etc., an angle threshold, e.g., 1 degree, 2 degrees, 4 degrees, 6 degrees, etc.). The time threshold may be 100 milliseconds, 50 milliseconds, etc.

The change threshold or the time threshold may be a default setting of the system 100 or be set by a user.

In response to determining that the pose change at the current time relative to the previous time does not exceed the change threshold or the difference between the current time and the previous time does not exceed the time threshold, the processing device 110 may proceed to perform operation 604; in response to determining that the pose change at the current time relative to the previous time exceeds the change threshold or the difference between the current time and the previous time exceeds the time threshold, the processing device 110 may proceed to perform operation 606 and/or perform operation 612.

In 604, the processing device 110 (e.g., the determination module 408) may determine, based on the odometer data at a current time, a target pose of a mobile subject at the current time.

In some embodiments, the processing device 110 may determine the target pose of the mobile subject at the current time based on the target pose at the previous time and the odometer data. The target pose at the previous time may be determined according to process 500 or other manners as described in the present disclosure.

In some embodiments, the processing device 110 may determine the target pose of the mobile subject at the current time using a movement model denoted by Equation (2) as follows: $\left(\begin{matrix}{x}_{t} \\ {y}_{t} \\ {θ}_{t}\end{matrix}\right) = \left(\begin{matrix}cos θ & - sin θ & 0 \\ sin θ & cos θ & 0 \\ 0 & 0 & 1\end{matrix}\right) \left(\begin{matrix}dx \\ dy \\ dθ\end{matrix}\right) ,$ (2) where *pₜ =* [*xₜ yₜ θₜ*]*^{T}* refers to the target pose of the mobile subject at the current time, *p* = [*x y θ*]*^{T}* refers to the target pose of the mobile subject at the previous time, and *uₜ =* [*dx dy dθ*]*^{T}* refers to the odometer data at the current time.

In 606, the processing device 110 (e.g., the determination module 408) may determine whether the odometer data is abnormal. The anomaly of the odometer data may be caused by the slipping of the mobile subject (e.g., the slipping of the wheels of the mobile subject), the fault of the odometer of the mobile subject, etc.

In some embodiments, the processing device 140 may determine whether the odometer data is abnormal based on a first matching result between laser data and a reference map. The first matching result may be obtained as described elsewhere in the present disclosure (e.g., FIG. 5 and the descriptions thereof).

For example, the processing device 110 may determine, based on the first matching result, one or more estimated first pose changes at one or more consecutive time points before the current time. The processing device 110 may determine, based on the odometer data, one or more estimated third pose changes at the one or more consecutive time points. The processing device 110 may determine that the odometer data is abnormal in response to determining that a difference between each of the one or more estimated first pose changes and one of the one or more estimated third pose changes at the same time point among the one or more consecutive time points exceeds a difference threshold.

An estimated first pose change at a time point may include a change of the pose of the mobile subject at the time point relative to a previous time point consecutive to the time point. The estimated first pose change at a time point may be determined based on an estimated first pose at the time point and an estimated first pose at the previous time point. For example, the first pose change at a time point may be determined according to Equation (3) as follows: $Δ {T}^{G} = {G}_{1}^{- 1} {G}_{2} = {\left(\begin{matrix}cos {θ}_{G 1} - sin {θ}_{G 1} {x}_{G 1} \\ sin {θ}_{G 1} cos {θ}_{G 1} {y}_{G 1} \\ 0 0 1\end{matrix}\right)}^{- 1} \left(\begin{matrix}cos {θ}_{G 2} - sin {θ}_{G 2} {x}_{G 2} \\ sin {θ}_{G 2} cos {θ}_{G 2} {y}_{G 2} \\ 0 0 1\end{matrix}\right) ,$ (3) where *G*1 = [*x*_{*G*1} *y*_{*G*1} *θ*_{*G*1}]*^{T}* refers to an estimated first pose at the previous time point, *G*2 = [*x*_{*G*2} *y*_{*G*2} *θ*_{*G*2}]*^{T}* refers to an estimated first pose at the time point, and Δ*T^{G}* refers to the estimated first pose change at the time point. In some embodiments, the odometer data may include the estimated third pose change. In some embodiments, the odometer data may include an estimated third pose at the previous time point and an estimated third pose at the time point. The processing device 110 may determine the third pose change based on the estimated third pose at the previous time point and the estimated third pose at the time point according to Equation (4) as follows: $Δ {T}^{o} = {O}_{1}^{- 1} ⋅ {O}_{2} = {\left(\begin{matrix}cos {θ}_{o 1} - sin {θ}_{o 1} {x}_{o 1} \\ sin {θ}_{o 1} cos {θ}_{o 1} {y}_{o 1} \\ 0 0 1\end{matrix}\right)}^{- 1} \left(\begin{matrix}cos {θ}_{o 2} - sin {θ}_{o 2} {x}_{o 2} \\ sin {θ}_{o 2} cos {θ}_{o 2} {y}_{o 2} \\ 0 0 1\end{matrix}\right) ,$ (4) where *O*1 = [*x*_{*O*1} *y*_{*O*1} *θ*_{*O*1}]*^{T}* refers to an estimated third pose at the previous time point, *O*2 = [*x*_{*O*2} *y*_{*O*2} *θ*_{*O*2}]*^{T}* refers to an estimated third pose at the time point, and Δ*T^{o}* refers to the third pose change at the time point.

In some embodiments, the processing device 110 may determine whether the odometer data is abnormal based on the first matching result between laser data and the reference map if the first matching result satisfies a condition. The first matching result satisfying the condition may refer to that the first matching result is reliable. In other words, the first matching result being reliable may be that the estimated first poses determined based on the reference map and the laser data is reliable.

In some embodiments, the first matching result satisfying the condition may be such that a score of the first matching result exceeds a score threshold (e.g., 30, 40, 50, etc.). The score of the first matching result may indicate a matching degree between the laser data and the reference map. The matching degree between the laser data and the reference map may be determined using a root mean square error (RMSE) algorithm, a largest common pointset (LCP) algorithm, etc.

In some embodiments, the first matching result satisfying the condition may be such that a reference object (e.g., a reflective column or strip) is scanned by the laser radar when the laser radar acquires the laser data. Whether the reference object is scanned by the laser radar may be determined by determining whether the laser data represents the reference object. For example, the processing device 110 may extract feature data from the laser data. The feature data may be compared with the features of the reference object to determine whether the laser data represents the reference object.

In some embodiments, the processing device 110 may determine whether the odometer data is abnormal based on a second matching result between laser data and a sub map. The second matching result may be obtained as described elsewhere in the present disclosure (e.g., FIG. 5 and the descriptions thereof).

For example, the processing device 110 may determine, based on the second matching result, one or more estimated second pose changes at one or more consecutive time points. The processing device 110 may determine, based on the odometer data, one or more estimated third pose changes at the one or more consecutive time times. The processing device 110 may that the odometer data is abnormal in response to determining that a difference between each of the one or more estimated second pose changes and one of the one or more estimated third pose changes at the same time point among the one or more consecutive time points exceeds a difference threshold.

An estimated second pose change at a time point may include a change of the pose of the mobile subject at the time point relative to a previous time point consecutive to the time point. The estimated second pose change at a time point may be determined based on an estimated second pose at the time point and an estimated second pose at the previous time point. For example, the estimated second pose change at a time point may be determined according to Equation (5) as follows: $Δ {T}^{l} = {T}_{1}^{- 1} ⋅ {T}_{2} = {\left(\begin{matrix}cos {θ}_{T 1} & - sin {θ}_{T 1} & {x}_{T 1} \\ sin {θ}_{T 1} & cos {θ}_{T 1} & {y}_{T 1} \\ 0 & 0 & 1\end{matrix}\right)}^{- 1} \left(\begin{matrix}cos {θ}_{T 2} & - sin {θ}_{T 2} & {x}_{T 2} \\ sin {θ}_{T 2} & cos {θ}_{T 2} & {y}_{T 2} \\ 0 & 0 & 1\end{matrix}\right) ,$ (5) where *T*1 = [*x*_{*T*1} *y*_{*T*1} *θ*_{*T*1}]*^{T}* refers to an estimated first pose at the previous time point, *T2 =* [*x*_{*T*2} *y*_{*T*2} *θ*_{*T*2}]*^{T}* refers to an estimated first pose at the time point, and Δ*T^{l}* refers to the estimated second pose change at the time point.

In some embodiments, the processing device 110 may determine whether the odometer data is abnormal based on the second matching result between laser data and the reference map if the first matching result does not satisfy the condition. The second matching result not satisfying the condition may refer to that the second matching result is unreliable. In other words, the second matching result being unreliable may be that estimated second poses determined based on the sub map and the laser data is unreliable.

In some embodiments, the first matching result not satisfying the condition may be such that the score of the first matching result does not exceed a score threshold (e.g., 30, 40, 50, etc.) and the reference object (e.g., a reflective column or strip) is not scanned by the laser radar when the laser radar acquires the laser data.

In some embodiments, the processing device 110 may determine whether the odometer data is abnormal by detecting whether the odometer data is updated in a time period (e.g., 100ms, 80ms, etc.). In some embodiments, the processing device 110 may determine whether the odometer data is abnormal by detecting whether a speed change of the mobile subject in a time period (e.g., 10ms, 20ms, etc.) determined based on the odometer data exceeds a speed threshold.

In some embodiments, in response to determining that the odometer data is not abnormal, the processing device 110 may proceed to perform 608; in response to determining that the odometer data is abnormal, the processing device 110 may proceed to perform 610.

In some embodiments, in response to determining that the odometer data is not abnormal, the processing device 110 may proceed to perform 612.

In 608, the processing device 110 (e.g., the determination module 408) may determine one or more constraint items based on the odometer data, a first matching result between laser data and a reference map, and a second matching result between a sub-map and the laser data.

The first matching result, the second matching result, the reference map, and the sub map may be obtained as described elsewhere in the present disclosure (e.g., FIG. 5 and the descriptions thereof).

The one or more constraint items may include a first constraint item constructed based on the first matching result, a second constraint item constructed based on the second matching result, and a third constraint item constructed based on the odometer data.

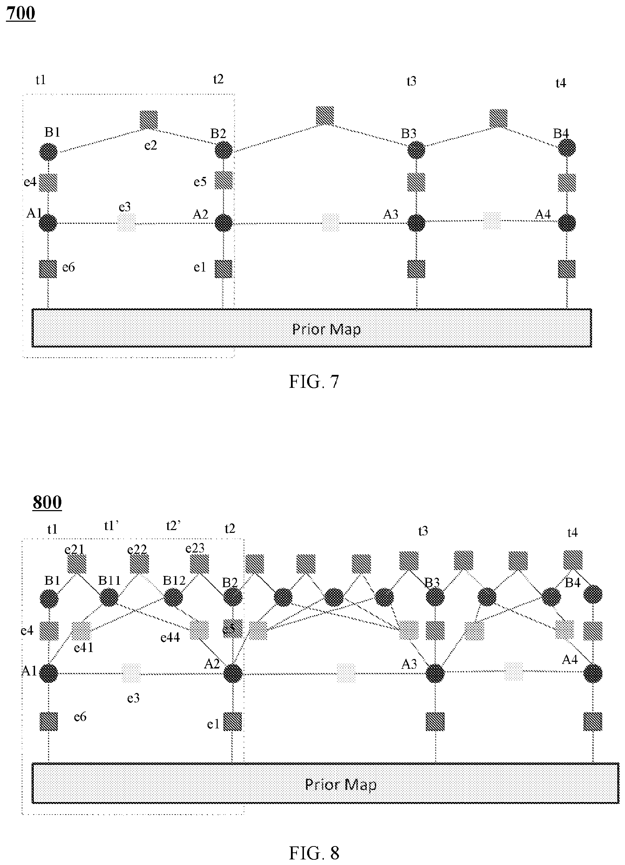

The first constraint item may be configured to constrain an error between a first estimated pose associated with the first matching result (also referred to as a global matching result) and a desired pose (i.e., an optimization variable, or an actual pose, or a target pose) at a first time point. In some embodiments, for determining the target pose at the current time, the first time point may be a time point closest to the current time or may be the current time. The first time point may correspond to a first optimization node (also referred to as a global optimization node, e.g., nodes A1, A2, A3, A4 as shown in FIG. 7). An optimization variable at the first optimization node may also be referred to as a global optimization variable. The optimization variable that is needed to be optimized and represents the pose may also be referred to as an absolute optimization variable.

In some embodiments, the laser data may include one or more first frames each of which corresponds to a first timestamp in a time range between a previous time and the current time. The first frames may be matched with the reference map to obtain the first matching result. The first matching result may include one or more first estimated poses each of which corresponds to a first timestamp of a first frame in the one or more first frames. The first time point may be a time point represented by a first timestamp of a first frame in the one or more first frames.

In some embodiments, the first constraint item may be constructed based on a difference between a first estimated pose at the first time point in the time range and an actual pose (or desired pose) at the first time point. In some embodiments, the first constraint item may be denoted by Equation (6) as follows: $ei 1 = p 1 ∗ \left(G2-N2\right) = \left\{\begin{matrix}p {1}^{t} ∗ \left(G2x-N2x\right) \\ p {1}^{t} ∗ \left(G2y-N2y\right) \\ p {1}^{θ} ∗ \left(G2θ-G2θ\right)\end{matrix}\right. ,$ (6) where *p*1 refers to weights of the first constraint and denotes a constraint strength, *p*1*^{t}*denotes a weight corresponding to a location (x, y), *p*1*^{θ}* denotes a weight corresponding to a direction (or angle *θ*), *G2 =* [*G2x G*2*y G*2*θ*]*^{T}* refers to an estimated first pose at the first time point (i.e., a time point closest to the current time), and *N*2 *=* [*N2x N2y N*2*θ*]*^{T}* refers to an actual pose (i.e., a global optimization variable) at the first time point (i.e., a time point closest to the current time).

The second constraint item may be configured to constrain an error between an estimated second pose change associated with the second matching result and a desired pose change (i.e., an optimization variable, or an actual pose change, or a target pose change) at a second time point relative to a previous second time point. For determining the target pose at the current time, the second time point may be a time point closest to the current time or may be the current time. The previous second time point may be a time point in the time period from the previous time to the current time or may be the previous time. In some embodiments, the second time point may be the same as the first time point. A second time point may correspond to as a second optimization node (also referred to as a local optimization node, e.g., nodes B1, B2, B3, B4 in FIG. 7). An optimization variable at the local optimization node may also be referred to as a local optimization variable. The optimization variable representing a pose change may also be referred to as a relative optimization variable.

In some embodiments, the laser data may include one or more second frames each of which corresponds to a second timestamp in a time range between a previous time and the current time. The second frames may be matched with the sub map to obtain the second matching result. The second matching result may include one or more second estimated poses each of which corresponds to a second timestamp of a second frame in the one or more second frames. The second time point may be a time point represented by a second timestamp of a second frame in the one or more second frames.

The second constraint item may be constructed based on a difference between an estimated second pose change at the second time point in the time range and an actual pose change at the second time point. In some embodiments, the second constraint item may be denoted by Equation (7) as follows: $ei 2 = p 2 ∗ \left({ΔT}^{l}-L{1}^{- 1}∗L2\right) ,$ (7) where p2 refers to weights of the second constraint item and denotes a constraint strength, Δ*T^{l}* refers to an estimated second pose change at the second time point (i.e., a time point closest to the current time), and L1 refers to a local optimization variable (i.e., an absolute optimization variable, a desired pose) at the previous second time point, L2 refers to a local optimization variable (i.e., an absolute optimization variable, a desired pose) at the second time point, *L*1⁻¹ * *L*2 refers to a pose change (i.e., a relative optimization variable) at the second time point (i.e., a time point closest to the current time) relative to the previous second time point determined based on the absolute local optimization variable (i.e., a desired pose) at the previous second time point and the absolute local optimization variable (i.e., a desired pose) at the second time point. The absolute local optimization variable (i.e., a desired pose) at the previous second time point may be determined during the last optimization process.

The third constraint item may be configured to constrain an error between an estimated third pose change corresponding to the odometer data and an optimization pose change (i.e., an optimization variable, a desired pose, or an actual pose) at the first time point (i.e., the global optimization node) relative to a previous first time point (i.e., another global optimization node). In some embodiments, the third constraint item may be denoted by Equation (8) as follows: $ei 3 = p 3 ∗ \left(Δ{T}^{o}-N{1}^{- 1}∗N2\right) = p 3 {T}^{o} - \left\{\begin{matrix}p {3}^{t} ∗ \left({{R}_{N 1}}^{T}∗\left(N{2}^{t}-N{1}^{t}\right)\right) \\ p {3}^{θ} \left(N{2}^{θ}-N{1}^{θ}\right)\end{matrix},\right.$ (8) where p3 refers to weights of the third constraint item, *p*3*^{t}* refers to a weight corresponding to a translation (i.e., the location), *p3^{θ}* refers to a weight corresponding to a rotation (i.e., the angle), *ΔT^{o}* refers to an estimated third pose change at the second time point (i.e., a time point closest to the current time), *N*1 refers to an absolute global optimization variable (i.e., a desired pose) at the previous first time point, *N*2 refers to an absolute global optimization variable (i.e., a desired pose) at the previous time point, *N*1⁻¹ * *N*2 refers to a pose change (i.e., a relative global optimization variable) at the first time point (i.e., a time point closest to the current time) relative to the previous first time point determined based on the absolute global optimization variable (i.e., a desired pose) at the previous first time point and the absolute global optimization variable (i.e., a desired pose) at the first time point, *R*_{*N*1} refers to a rotation matrix corresponding to *N*1*.* The absolute global optimization variable (i.e., a desired pose) at the previous first time point may be determined during the last optimization process.

In some embodiments, if one or more second frames between the second time point and the previous second time point (or between the first time point and the previous first time point), in other words, one or more extra local optimization nodes (e.g., nodes B11, B12 as shown in FIG. 8) are between the second time point and the previous second time point (or between the first time point and the previous first time point), the one or more constraint items may include at least one constraint item constructed between one of the one or more extra local optimization nodes and one of the global optimization nodes or constructed between one of the one or more extra local optimization nodes and one of the local optimization nodes at the second time point and the previous second time point. For example, the one or more constraint items may further include at least one of a fourth constraint item, a fifth constraint item, or a sixth constraint item.

The fourth constraint item may be constructed between an extra local optimization node and a global optimization node at the previous first time point. The fourth constraint item may be configured to constrain an error between an estimated second pose change at an extra second time point corresponding to the extra local optimization node relative to the previous first time point corresponding to the global optimization node and a pose change determined based on a global optimization variable corresponding to the global optimization node and a local optimization variable corresponding to the extra local optimization node. As a further example, the fourth constraint item may be denoted as Equation (9) as follows: $eli {4}_{1} = p 4 ∗ \left({ΔT}_{li}^{N 1}-N{1}^{- 1}∗Li\right) ,$ (9) where ${ΔT}_{li}^{N 1} = {O}_{N 1}^{- 1} ⋅ {O}_{li}$, *O*_{*N*1} refers to an estimated third pose at the previous first time point, i.e., at the global optimization node corresponding to the previous first time point, and *Oₗᵢ* refers to an estimated third pose at the extra second time point between the previous second time point and the second time point, i.e., at the extra local optimization node. *Oₗᵢ* may be determined based on odometer data at timestamps that are closest to the extra second time point. For example, *Oₗᵢ* may be determined based on estimated third poses at the timestamps that are closest to the extra second time point using an interpolation algorithm. *O*_{*N*1} may be determined based on odometer data at timestamps that are closest to the previous first time point. For example, *O*_{*N*1} may be determined based on estimated third poses at the timestamps that are closest to the previous first time point using an interpolation algorithm. The timestamps that are closest to a time point (e.g., the previous first time point, the extra second time point) may include one timestamp before the time point and one timestamp after the time point.

The fifth constraint item may be constructed between the extra local optimization node and a global optimization node at the first time point. The fifth constraint item may be constructed to constrain an error between an estimated third pose change at a second time point corresponding to the extra local optimization node relative to the first time point corresponding to the global optimization node and a pose change determined based on a global optimization variable corresponding to the global optimization node and a local optimization variable corresponding to the extra local optimization node. As a further example, the fifth constraint item may be denoted as Equation (10) as follows: $eli {4}_{2} = p 4 ∗ \left({ΔT}_{li}^{N 2}-N{2}^{- 1}∗Li\right) ,$ (10) where ${ΔT}_{li}^{N 2} = {O}_{N 2}^{- 1} ⋅ {O}_{li}$, *O*_{*N*2} refers to an estimated third pose at the first time point, i.e., at the global optimization node corresponding to the first time point, and *Oₗᵢ* refers to the estimated third pose at the extra second time point between the previous second time point and the second time point, i.e., at the extra local optimization node. *O*_{*N*2} may be determined based on odometer data at timestamps that are closest to the first time point. For example, *O*_{*N*2} may be determined based on estimated third poses at the timestamps that are closest to the first time point using an interpolation algorithm.

The sixth constraint item may be constructed between the extra local optimization node and a local optimization node at the previous second time point. The sixth constraint item may be constructed to constrain an error between an estimated third pose change at the extra second time point corresponding to the extra local optimization node relative to the previous second time point corresponding to the local optimization node and a pose change determined based on a local optimization variable corresponding to the local optimization node and a local optimization variable corresponding to the extra local optimization node. As a further example, the sixth constraint item may be denoted as Equation (11) as follows: $eli {4}_{3} = p 4 ∗ \left({ΔT}_{li}^{l 1}-L{1}^{- 1}∗Li\right) ,$ (11) where ${ΔT}_{li}^{l 1} = {T}_{l 1}^{- 1} ⋅ {T}_{li}$, *T*_{*l*1} refers to an estimated second pose at the previous second time point, i.e., at the local optimization node corresponding to the previous second time point, and T*ₗᵢ* refers to an estimated second pose at the extra second time point between the previous second time point and the second time point, i.e., at the extra local optimization node. *Tₗᵢ* may be determined based on the second matching result.

In some embodiments, the one or more constraint items may include a constraint item constructed between the extra local optimization node and a local optimization node at the second time point. The constraint item may be constructed to constrain an error between an estimated third pose change at the extra second time point corresponding to the extra local optimization node relative to the second time point corresponding to the local optimization node and a pose change determined based on a local optimization variable corresponding to the local optimization node and a local optimization variable corresponding to the extra local optimization node. As a further example, the sixth constraint item may be denoted as Equation (12) as follows: $eli {4}_{4} = p 4 ∗ \left({ΔT}_{li}^{l 2}-L{2}^{- 1}∗Li\right) ,$ (12) where ${ΔT}_{li}^{l 2} = {T}_{l 2}^{- 1} ⋅ {T}_{li}$, *T*_{*l*1} refers to an estimated second pose at the second time point, i.e., at the local optimization node corresponding to the second time point, and *Tₗᵢ* refers to an estimated second pose at the extra second time point between the previous second time point and the second time point, i.e., at the extra local optimization node. *Tₗᵢ* may be determined based on the second matching result.

In 610, the processing device 110 (e.g., the determination module 408) may determine one or more constraint items based on a first matching result between laser data and a reference map and a second matching result between a sub-map and the laser data.

For example, the one or more constraint items may include the first constraint item and the second constraint item as described in operation 608.

As another example, the one or more constraint items may include the first constraint item, the second constraint item, and the sixth constraint item as described in operation 608.

In 612, the processing device 110 (e.g., the determination module 408) may determine whether the first matching result satisfies a condition. More descriptions for determining whether the first matching result satisfies the condition may be found in operation 606.

In response to determining that the first matching result satisfies the condition, the processing device 110 may perform operation 608; in response to determining that the first matching result satisfies the condition, the processing device 110 may perform operation 614.

In 614, the processing device 110 (e.g., the determination module 408) may determine the one or more constraint items based on the second matching result between a sub-map and the laser data and the odometer data.

For example, the one or more constraint items may include the second constraint item and the third constraint item.

As another example, the one or more constraint items may include the second constraint item, the third constraint item, the fourth constraint item, the fifth constraint item, and the sixth constraint item.

In 616, the processing device 110 (e.g., the determination module 408) may determine, based on the one or more constraint items, the target pose at the current time.

In some embodiments, the processing device 110 may determine a global optimization variable (e.g., an optimization pose or a target pose at the first time point closest to the current time) based on the one or more constraint items according to an optimization algorithm as described elsewhere in the present disclosure (e.g., FIG. 5). The processing device 110 may determine the target pose at the current time based on the odometer data at the current time and the first time point closest to the current time, and the determined global optimization variable.

In some embodiments, the processing device 110 may perform an iteration process including multiple iterations. In each of the multiple iterations, the processing device 110 may determine a value of the global optimization variable that may reduce the value of each of the one or more constraint items until a termination condition is satisfied. The termination condition may include that a count of iterations are performed, the value of each of the one or more constraint items converges, the values of each of the one or more constraint items are minimum, etc.

In some embodiments, the processing device 110 may determine an initial value of the global optimization variable. The processing device 110 may perform the optimization algorithm based on the initial value of the global optimization variable. In some embodiments, if the odometer data is normal, the processing device 110 may determine the initial value of the global optimization variable according to Equation (13) as follows: ${T}_{N 2} = {T}_{N 1}^{G} ∗ Δ T ,$ (13) where *T*_{*N*2} refers to the initial value of the global optimization variable, Δ*T* refers to a pose change at the first time point closest to the current time relative to a previous first time point, and ${T}_{N 1}^{G}$ refers to an optimization result generated in a last optimization process, i.e., a target value of the global optimization variable at the previous first time point (i.e., the target pose at the previous first time point). *ΔT* may be determined based on the estimated third poses at the first time point and the previous first time point according to Equation (4). In some embodiments, the estimated third pose at the first time point may be determined based on odometer data at timestamps that are closest to the first time point using an interpolation algorithm. In some embodiments, the estimated third pose at the previous first time point may be determined based on odometer data at timestamps that are closest to the previous first time point using an interpolation algorithm.

In some embodiments, if the odometer data is abnormal, the initial value of the global optimization variable may be determined based on the second matching result at the first time point closest to the current time and the current time. For example, the initial value of the global optimization variable may be determined based on the second matching result according to a moving model as denoted by Equation (14) as follows: ${L}_{c} = {T}_{p} ∗ \left[\left({t}_{c}-{t}_{p}\right)/\left({t}_{p}-{t}_{pp}\right)\right] ∗ \left({L}_{P}^{- 1}∗{L}_{pp}\right) ,$ (14) where *Lₚ* refers to an estimated second pose at the previous second time point before the second time point (i.e., a matching result between the previous second frame with the sub map), *tₚ* refers to a timestamp corresponding to the previous second frame, *t_{c}* refers to a timestamp corresponding to the second frame at the second time point, *Lₚₚ* refers to an estimated second pose at a previous-previous second time point before the previous second time point (i.e., a matching result between a previous-previous second frame before the previous second frame with the sub map), *tₚₚ* refers to a timestamp corresponding to the previous-previous second frame, *L_{c}* refers to an estimated second pose at the second time point, i.e., the initial value of the global optimization variable.

The processing device 110 may determine the target pose at the current time based on a pose change at the current time relative to the first time point closest to the current time and the target values of the global optimization variable (i.e., the target pose at the first time point) according to Equation (15) as follows: $T = {T}_{N 2} ∗ Δ T 1 ,$ (15) where *T* refers to the target pose at the current time, Δ*T*₁ refers to a pose change at the current time point relative to the first time point, and *T*_{*N*2} refers to an optimization result generated in the optimization process, i.e., a target value of the global optimization variable at the first time point.

In some embodiments, the pose change at the current time relative to the first time point closest to the current time may be determined based on the odometer data at the first time point and the current time.

In some embodiments, the processing device 110 may obtain an optimization model which is constructed based on multiple modes and an optimization algorithm. The processing device 110 may input the constraint items, the optimization model may output the target values of the global optimization variable. More descriptions for the optimization model may be found elsewhere in the present disclosure (e.g., FIGs. 7-10).

In some embodiments, the processing device 110 may construct the optimization model based on a machine learning algorithm. For example, the optimization model may be obtained by training a preliminary machine learning model. Exemplary machine learning models may include a convolutional neural network (CNN) model, a recurrent neural network (RNN) model, a long short term memory (LSTM) network model, a fully convolutional neural network (FCN) model, a generative adversarial network (GAN) model, a radial basis function (RBF) machine learning model, a DeepMask model, a SegNet model, a dilated convolution model, a conditional random fields as recurrent neural networks (CRFasRNN) model, a pyramid scene parsing network (pspnet) model, or the like, or any combination thereof.

The optimization model may be trained based on a plurality of training samples. Each of the training samples may include odometer data, a first matching result, and a second matching result. The training label may include a target value of an optimization variable or a target post at a time point. The target pose may be determined according to process 500 as illustrated in FIG. 5.

According to some embodiments of the present disclosure, the system may determine a target pose by fusing the odometer data, the first matching result between the laser data and the reference map, and the second matching result between the laser data and the sub map, which may improve the robustness and accuracy of the positioning. In addition, the system may determine the target pose when the odometer data is abnormal or when the matching between the reference map and the laser data is unreliable, which may improve the robustness and accuracy of the positioning.

FIG. 7 is a schematic diagram illustrating an exemplary optimization model according to some embodiments of the present disclosure. As shown in FIG. 7, an optimization model 700 may include multiple nodes denoted by circles, e.g., global optimization nodes A1, A2, A3, A4, etc., and local optimization nodes B1, B2, B3, B4, etc. Each of the global optimization nodes A1, A2, A3, A4 may be used to optimize or determine a global optimization variable (e.g., a global optimization pose) at a time point (also referred to as first time point) (e.g., t1, t2, t3, t4). Each of the first time points where the global optimization nodes A1, A2, A3, A4 are located may correspond to one of first timestamps of first frames (also referred to as global frames) of laser data that are used to be matched with a reference map to obtain a first matching result (also referred to as a global matching result). Each of the local optimization nodes B1, B2, B3, B4 may be used to optimize or determine a local optimization variable (e.g., a local optimization pose) at a time point (also referred to as second time point) (e.g., t1, t2, t3, t4). Each of the second time points where the local optimization nodes B1, B2, B3, B4 are located may correspond to one of second timestamps of second frames (also referred to as local frames) of laser data that are used to be matched with a sub map to obtain a second matching result (also referred to as a local matching result).

As shown in FIG. 7, each of the local frames may correspond to one of the global frames. In other words, there is no extra frames between two adjacent local frames. There are a local frame and a global frame that has the same time sample. The first time points and the second time points may be consistent. One or more constraint items (denoted as rectangles) may be added or constructed between two adjacent nodes at the same time point and/or two adjacent time points. For example, among the global optimization nodes A1, A2 and local optimization nodes B1 and B2, two adjacent nodes may include the global optimization node A2 and the adjacent global optimization node A1, the local optimization node B2 and the adjacent local optimization node B1, the global optimization node A2 and the adjacent local optimization node B2, the global optimization node A1 and the adjacent local optimization node B1.

If the time point t2 (e.g., the first time point or the second time point) is closest to a current time, for determining the target pose at the current time, among the global optimization nodes A1, A2 and local optimization nodes B1 and B2, a constraint item e1 (also referred to as a first constraint item) may be constructed for the global optimization node A2 based on the first matching result according to Equation (6). The constraint item e1 may be constructed to constraint an error between the estimated first pose determined by matching the first frame with a first timestamp corresponding to the time point t2 with the prior map (i.e., the reference map) and a global optimization variable (i.e., a pose to be determined or optimized) at the time point t2. The global optimization variable (i.e., a pose to be determined or optimized) at the time point t2 may be an absolute variable (i.e., absolute global optimization variable).

A constraint item e2 (also referred to as a second constraint item) may be constructed between the local optimization node B2 and the local optimization node B1 according to Equation (7). The constraint item e2 may be constructed to constraint an error between the estimated second pose change at the time point t2 relative to the time point t1 and a local optimization variable (i.e., a pose change to be determined or optimized) at the time point t2. The estimated second pose change (or the second matching result) may be determined by matching the second frames with second timestamps corresponding to the time points t1 and t2 with a sub map. The local optimization variable at the time point t2 (i.e., a pose change to be determined or optimized may be a relative variable (i.e., relative local optimization variable), and determined based on or denoted by an absolute local optimization variable at time point t2 and an absolute local optimization variable at time point t1.

A constraint item e3 (also referred to as a third constraint item) may be constructed between the global optimization node A2 and the global optimization node A1 according to Equation (8). The constraint item e3 may be constructed to constraint an error between the estimated third pose change at the time point t2 relative to the time point t1 and a global optimization variable (i.e., a pose change to be determined or optimized) at the time point t2. The estimated third pose change may be determined based on odometer data at the time points t2 and t1. The global optimization variable at the time point t2 (i.e., a pose change to be determined or optimized may be a relative variable (i.e., relative global optimization variable), and determined based on or denoted by an absolute global optimization variable at time point t2 and an absolute global optimization variable at time point t1.

As the first timestamp corresponding to the global optimization node A1 and the second timestamp corresponding to the local optimization node B1 are the same, a relationship between the absolute global optimization variable at node A1 and the relative local optimization variable at node B1 may be a unit matrix, such that a constraint item e4 may be equal to 0. For the same reasons, a constraint item e5 may be equal to 0. A constraint item e5 may be constructed in the last optimization process for determining a target pose at a time point closest to the time point t1.

In some embodiments, there may be one or more extra local frames (e.g., keyframes) between time points t1 and t2, i.e., the local frames and the global frames are in no one-to-one correspondence.

For example, FIG. 8 is a schematic diagram illustrating another exemplary optimization model according to some embodiments of the present disclosure.

As shown in FIG. 8, different from the optimization model 700, as there are one or more extra local frames (e.g., keyframes) between time points t1 and t2, one or more extra local optimization nodes (e.g., B11, B12) may be between time points t1 and t2. One or more extra constraint items may be constructed or added between one of the global optimization nodes A1, A2 and one of the extra local optimization nodes B11, B12, and/or between two adjacent local optimization nodes (B1, B11, B12, B2).

For example, a constraint item e44 (e.g., the fifth constraint item as described in FIG. 6) may be constructed between the global optimization node A2 and one of the extra local optimization nodes B11, B12 at time points t1' and t2', respectively. For example, the constraint item e44 may be constructed between the global optimization node A2 and the local optimization node B12 according to Equation (10). The constraint item e44 may be constructed to constrain an error between the estimated pose change at the time point t2 relative to the time point t2' and a global optimization variable (i.e., a pose change to be determined or optimized) at the time point t2 relative to the time point t2'. The estimated pose change at the time point t2 relative to the time point t2' may be determined based on an estimated third pose at the time point t2' and an estimated third pose at the time point t2. The estimated third pose at the time point t2' may be determined based on estimated third poses at two adjacent time points that are closest to the time point t2' using an interpolation algorithm. The adjacent time points may correspond to timestamps of odometer data and may include one time point before and closest to the time point t2' and one time point after and closest to the time point t2'. The global optimization variable at the time point t2 (i.e., a pose change to be determined or optimized may be a relative variable (i.e., relative global optimization variable), and determined based on or denoted by an absolute global optimization variable at time point t2 and an absolute global optimization variable at time point t2'. The constraint item e44 between the global optimization node A2 and the local optimization node B11 may be constructed as the constraint item e44 between the global optimization node A2 and the local optimization node B12.

The construction of the constraint item e44 may be the same as or similar to the construction of the constraint item e3 as described in FIG. 7.

A constraint item (e.g., e23, e22, e21) may be constructed between two adjacent local optimization nodes among B11, B12, B2, B1. For example, the constraint item e23 (e.g., the sixth constraint as described in FIG. 6) may be constructed between the local optimization node B2 and the local optimization node B12 according to Equation (11). The constraint item e23 may be constructed to constraint an error between the estimated pose change at the time point t2 relative to the time point t2' and a local optimization variable (i.e., a pose change to be determined or optimized) at the time point t2 relative to the time point t2'. The estimated pose change at the time point t2 relative to the time point t2' may be determined based on an estimated second pose at the time point t2' and an estimated second pose at the time point t2. The local optimization variable at the time point t2 (i.e., a pose change to be determined or optimized may be a relative variable (i.e., relative local optimization variable), and determined based on or denoted by an absolute local optimization variable at time point t2 and an absolute local optimization variable at time point t2'. The constraint items e22, e21 may be constructed as the constraint item e23 or the constraint item e2 as described in FIG. 7.

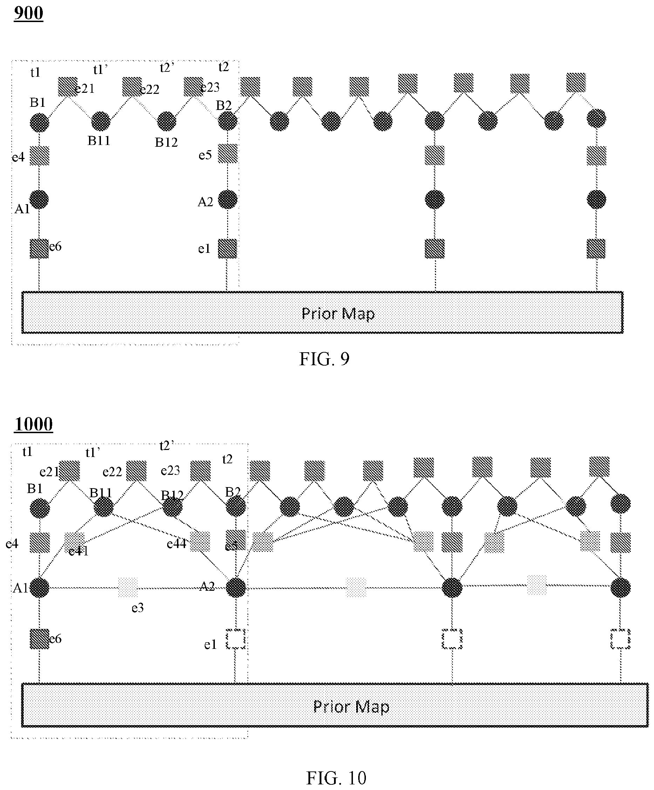

In some embodiments, the odometer data may be abnormal. The constraint items determined based on the odometer data may be removed or not constructed in an optimization model. For example, FIG. 9 is a schematic diagram illustrating another exemplary optimization model according to some embodiments of the present disclosure. Compared with the optimization model 800 as shown in FIG. 8, the optimization model 800 may not include the constraint item e3 and constraint items e44 and e41 that are determined based on the odometer data.

In some embodiments, the first matching result may be abnormal or unreliable. The constraint items determined based on the first matching result may be removed or not constructed in an optimization model. For example, FIG. 10 is a schematic diagram illustrating another exemplary optimization model according to some embodiments of the present disclosure. Compared with the optimization model 800 as shown in FIG. 8, the optimization model 1000 may not include the constraint item e3 and constraint item 1 that are determined based on the first matching result (i.e., the estimated first pose).

FIG. 11 is a flowchart illustrating an exemplary process for positioning a mobile subject according to some embodiments of the present disclosure. In some embodiments, process 1100 may be executed by the positioning system 100. For example, process 1100 may be implemented as a set of instructions (e.g., an application) stored in a storage device (e.g., the storage device 150, the storage device 220). In some embodiments, the processing device 110 (e.g., the processor 210 of the computing device 200, and/or one or more modules illustrated in FIG. 4B) may execute the set of instructions and may accordingly be directed to perform process 1100. The operations of the illustrated process presented below are intended to be illustrative. In some embodiments, process 1100 may be accomplished with one or more additional operations not described and/or without one or more of the operations discussed. Additionally, the order of the operations of process 1100 illustrated in FIG. 11 and described below is not intended to be limiting.

In 1110, the processing device (e.g., the obtaining module 401) may obtain reference data of one or more templates.

The reference data of each of the one or more templates may be acquired by a laser radar of an acquisition device when the acquisition device is at a location point. The acquisition device may be a mobile subject (e.g., a survey vehicle, a mobile robot, etc.) configured to acquire the reference data of the one or more templates. The location point may be a task point in a region including, e.g., a warehouse, a workshop, a supermarket, etc. A mobile subject (e.g., a mobile robot) may perform tasks at task points in the region. In some embodiments, the mobile subject for performing tasks may be the same as the mobile subject for acquiring the reference data of the one or more templates. In some embodiments, the mobile subject for performing tasks may be different from the mobile subject for acquiring reference data of the one or more templates.

A template may be or be arranged near a location point, such that the laser radar of the acquisition device may detect the template when the acquisition device arrives at the location point. For example, a distance between the template and the location point may be in a scan range of the laser data of the acquisition device.

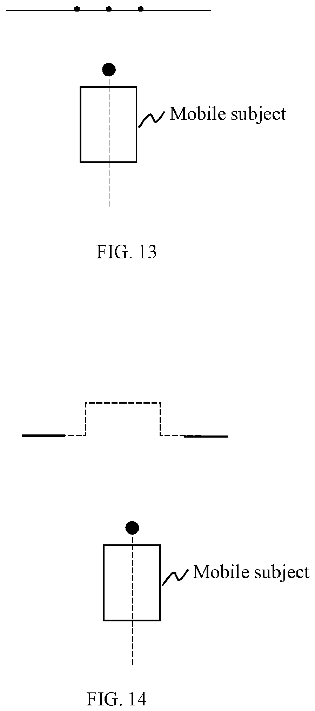

In some embodiments, a template may include a foreign object arranged around the location point. The reference data of the template may include position information (e.g., coordinates) of the foreign object at a coordinate system of the laser radar of the acquisition device. The foreign object may include one or more obvious features (e.g., a specific shape, a specific height, a specific size) that are different from other objects or the background around the foreign object, such that the foreign object may be distinguished from other objects around the object by the laser radar. For example, the template may include one or more reflective strips. The reference data of the template may include position information (e.g., coordinates) of the one or more reflective strips at the coordinate system of the laser radar of the acquisition device. The count of the one or more reflective strips may exceed a threshold (e.g., 2). For example, the count of the one or more reflective strips may be equal to 3, 4, etc. The width of a reflective strip may exceed a threshold (e.g., 1 centimeter, 2 centimeters, etc.). Distances between two adjacent reflective strips may be different. As shown in FIG. 13, FIG. 13 shows a schematic diagram illustrating an exemplary template according to some embodiments of the present disclosure. The template as shown in FIG. 13 may include 3 reflective strips denoted by dots.

In some embodiments, a template may include an original object or a background region around the location point. The reference data of the template may include position information (e.g., coordinates) of the original object or the background region at the coordinate system of the laser radar of the acquisition device. The original object or background region may include one or more obvious features (e.g., a specific shape, a specific height, a specific size) that are different from other objects or the background around the original object or background region, such that the original object or background region may be distinguished from other objects by the laser radar. For example, the template may include point cloud data associated with the original object or the background region. The point cloud data may be generated after a laser beam detects the original object or the background region and be reflected by the original object or the background region. The reference data of the template may include position information (e.g., coordinates) of the point cloud data representing the original object or the background region at the coordinate system of the laser radar of the acquisition device. As a further example, FIG. 14 shows a schematic diagram illustrating another exemplary template according to some embodiments of the present disclosure. The template as shown in FIG. 14 may include a point cloud frame representing a specific shape of an object.

The reference data may be associated with parameters of the acquisition device for acquiring the reference data and/or parameters of the template. The parameters of the acquisition device for acquiring the reference data may include at least one of a pose of the acquisition device, an identity of the laser radar, a scanning range of the laser radar, or one or more external parameters of the laser radar when acquiring the reference data. The pose of the acquisition device associated with the reference data of the template may include a position and/or posture of the acquisition device for acquiring the reference data. The position and/or posture of the acquisition device for acquiring the reference data may be the location point where the acquisition device is located when acquiring the reference data of the template. The identity of the laser radar of the acquisition device may be configured to identify the laser radar for scanning the template. The scanning range of the laser radar of the acquisition device may include a scanning region defined by a maximum scanning angle and a minimum scanning angle for scanning the template. The external parameters of the laser radar may include a pose (e.g., a position and/or posture) of the laser radar for scanning the template. For example, the position of the laser radar may include a vertical position (denoted by height) of the laser radar and a horizontal position. The parameters of the template may include an identity of the template, a type of the template, a location of the templates, or the like, or a combination thereof. The identity (e.g., an ID) of the template may be configured to identify the template from other templates. The type of the template may indicate whether the template is a reflective strip template or point-cloud template.

In some embodiments, a corresponding relationship may be established between the reference data of the template and the parameters of the acquisition device for acquiring the reference data and/or parameters of the template. In some embodiments, the corresponding relationship between the reference data of the template and the parameters of the acquisition device for acquiring the reference data and/or parameters of the template may be stored in a form of a table. For example, the table may represent the reference data of the template in a column and represent the parameters of the acquisition device for acquiring the reference data and/or parameters of the template in another column. In some embodiments, the corresponding relationship between the reference data of the template and the parameters of the acquisition device for acquiring the reference data and/or parameters of the template may be stored in a form of a data structure (e.g., k-dimensional tree).

The reference data of the one or more templates may be pre-acquired by the acquisition device before the mobile subject performs a task and stored in a storage device. The processing device 110 may obtain the reference data of the one or more templates from the storage device when the mobile subject is performing a task. In some embodiments, the acquisition device may be controlled to move to the location point according to a reference map. The laser radar of the acquisition device may be controlled to scan the template near the location point to obtain the reference data of the template. The reference data of the template and the parameters of the acquisition device for acquiring the reference data and/or parameters of the template that are associated with the reference data of the template may be stored in the storage device for positioning.

In 1110, the processing device 110 (e.g., a template determination module 403) may determine, based on a target location point of a mobile subject, a target template from the one or more templates.

In some embodiments, the processing device 110 may determine the target template from the one or more templates based on the target location point of the mobile subject. The target location point may be a location for the mobile subject performing a task. For example, the processing device 110 may determine whether a specific template is associated with the target location point. In response to determining that the specific template is associated with the target location point, the processing device 110 may determine the specific template as the target template. In some embodiments, the processing device 110 may determine whether the specific template is associated with the target location point based on the location of the specific template and the location of the target location point. For example, in response to determining that the distance between the location of the specific template and the location of the target location point is less than a threshold (e.g., 20 centimeters, 30 centimeters, 40 centimeters, etc.), the processing device 110 may determine that the specific template is associated with the target location point. As another example, the processing device 110 may determine whether the specific template is associated with the target location point based on the corresponding relationship between the reference data of the specific template and the parameters of the acquisition device for acquiring the reference data (including a pose of the acquisition device) and/or parameters of the template. If the position of the acquisition device for acquiring the specific template is the same as the target location point, the processing device 110 may determine that the specific template is associated with the target location point.

In some embodiments, during a process for a mobile subject (e.g., a mobile robot) to perform a task, the mobile subject may be controlled to move to a location point according to a path for performing the task. The path may include multiple nodes. When the mobile subject arrives at or near a node, the processing device 110 may determine whether the node is the target location point. If the node is the target location point, the processing device 110 may determine the target template based on the target location point.

In some embodiments, the processing device 110 may determine, based on the target location point, one or more candidate templates, and determine the target template based on the one or more candidate templates. For example, for each of the one or more candidate templates, the processing device 110 may determine whether one or more parameters of the laser radar of the acquisition device for acquiring the reference data of the candidate template matches one or more parameters of one of multiple laser radars of the mobile subject. The processing device 110 may determine at least one candidate template from the one or more candidate templates. The one or more parameters of one or more types of the laser radar of the acquisition device for acquiring the reference data of the at least one candidate template may match one or more parameters of the one of the multiple laser radars of the mobile subject. The processing device 110 may determine the target template based on the at least one candidate template. For example, the processing device 110 may designate one of the at least one candidate template with a minimum distance from the target location point as the target template.

The processing device 110 may determine the target laser radar from the multiple laser radars whose parameters match the one or more parameters of the laser radar of the acquisition device for acquiring the reference data of the target template. More descriptions for determining the target template and/or the target laser radar may be found elsewhere in the present disclosure (e.g., FIG. 12 and the descriptions thereof).

In 1130, the processing device (e.g., the obtaining module 401) may obtain laser data acquired by a target laser radar of the mobile subject scanning the target template.

The target laser radar may be determined as described elsewhere in the present disclosure (e.g., FIG. 12 and the descriptions thereof).

In some embodiments, the laser data acquired by the target laser radar may be acquired when the mobile subject arrives at the target location point. Whether the mobile subject arrives at the target location point may be determined based on the reference map. In some embodiments, the actual arrived location of the mobile subject may be different from the target location point.

In some embodiments, the laser data acquired by the target laser radar may be acquired when the mobile subject nears the target location point. For example, when the target template is located within the scanning range of the target laser radar during the mobile subject moves toward the target location point, the target laser radar may be initiated and emit a laser beam to scan the target template.

In 1140, the processing device (e.g., the pose determination module 405) may determine a target pose of the mobile subject based on the point cloud data and the reference data of the target template.

In some embodiments, the processing device 110 may determine a relative pose of the mobile subject in a coordinate system of the target laser radar by matching the point cloud data and the reference data. The processing device 110 may determine an estimated pose of the mobile subject in a coordinate system of the mobile subject based on the relative pose of the mobile subject in the coordinate system of the target laser radar. The processing device 110 may determine the target pose of the mobile subject based on the estimated pose of the mobile subject in the coordinate system of the mobile subject.

The processing device 110 may determine the relative pose of the mobile subject in the coordinate system of the target laser radar by matching the reference data and the laser data of the target template using a matching algorithm as described elsewhere in the present disclosure (e.g., FIG. 5). For example, if the target template includes a reflective strip template, the processing device 110 may match the reference data and the laser data using an ICP (iterative closest point) matching algorithm. If the target template includes a point-cloud template, the processing device 110 may match the reference data and the laser data using a PL-ICP (point-to-line iterative closest point) matching algorithm. As a further example, the processing device 110 may determine position information of the one or more reflective strips of the target template in the coordinate system of the target laser radar from the laser data using a reflection intensity detection algorithm. The processing device 110 may determine the relative pose between the position information of the one or more reflective strips of the target template in the coordinate system of the target laser radar and the position information of the one or more reflective strips of the target template in the coordinate system of the laser radar by matching the reference data and the laser data of the target template using the ICP algorithm.

The processing device 110 may determine the estimated pose of the mobile subject in the coordinate system of the mobile subject based on the relative pose of the mobile subject in the coordinate system of the target laser radar according to Equation (16) as follows: $M = Tc ∗ {ΔT}_{l}^{c} ∗ {L}_{i}^{- 1} ,$ (16) where *M* refers to the estimated pose of the mobile subject in a coordinate system of the mobile subject, ${ΔT}_{l}^{c}$ refers to the relative pose of the mobile subject in the coordinate system of the target laser radar, *Tc* refers to a pose of the acquisition device for acquiring the reference data of the target template in the coordinate system of the acquisition device, *Li* refers to a relative pose of the laser radar of the mobile subject relative to the mobile subject. The relative pose of the mobile subject in the coordinate system of the target laser radar may also be referred to as a pose change of the mobile subject between a pose when the target laser radar of the mobile subject acquires the laser data of the target template in the coordinate system of the target laser radar and a pose when the laser radar of the acquisition device acquires the reference data of the target template.

In some embodiments, the processing device 110 may designate the estimated pose of the mobile subject in the coordinate system of the mobile subject as the target pose of the mobile subject.

In some embodiments, the processing device 110 may determine the target pose of the mobile subject based on the estimated pose of the mobile subject in the coordinate system of the mobile subject according to process 500 and 600 as described in FIGs. 5 and 6. For example, the processing device 110 may reconstruct a sub map reflecting the scene based on the laser data and determine a second matching result by matching the sub map with the laser data. The processing device 110 may obtain odometer data acquired by an odometer of the mobile subject. The processing device 110 may determine a first matching result (e.g., the estimated pose) by matching the laser data with the reference data of the target template. The processing device 110 may determine the target pose of the mobile subject based on at least one of the odometer data, the first matching result, and the second matching result. The first matching result between the reference map and the laser data as described in FIGs. 5 and 6 may be replaced by the second matching result (i.e., the estimated pose) between the reference data and the laser data of the target template. Determining the target pose of the mobile subject based on at least one of the odometer data, the first matching result, and the second matching result may be performed according to operation 510 as described in FIG. 5 and process 600 as described in FIG. 6.

In some embodiments, when the mobile subject arrives at the target location point and acquires the laser data, the target pose (e.g., a target location) or the estimated pose determined according to operations 1110-1140 may be the same as or different from the target location point (e.g., a distance between the target pose and the target location point exceeds a threshold, e.g., 10 centimeters). If the distance between the target location and the target location point exceeds a threshold, e.g., 10 centimeters, the processing device 110 may control the mobile subject to move back a distance to arrive at a new location. The processing device 110 may perform operations 1130-1140 to update the target pose or the estimated pose until the target pose or the estimated pose is the same as or close to the target location point. For example, the processing device 120 may obtain laser data acquired by the target laser radar of the mobile subject via scanning the target template when the mobile subject is at the new location; and determine a new target pose of the moving subject based on the laser data by the target laser radar of the mobile subject via scanning the target template when the mobile subject is at the new location and the reference data of the target template. The new target pose may be compared with the target location point. Accordingly, the accuracy of positioning may be improved and satisfy the requirement.

FIG. 12 is a flowchart illustrating an exemplary process for determining a target template and/or a target laser radar for positioning according to some embodiments of the present disclosure. In some embodiments, process 1200 may be executed by the positioning system 100. For example, process 1200 may be implemented as a set of instructions (e.g., an application) stored in a storage device (e.g., the storage device 150, the storage device 220). In some embodiments, the processing device 110 (e.g., the processor 210 of the computing device 200, and/or one or more modules illustrated in FIG. 4B) may execute the set of instructions and may accordingly be directed to perform process 1200. The operations of the illustrated process presented below are intended to be illustrative. In some embodiments, process 1200 may be accomplished with one or more additional operations not described and/or without one or more of the operations discussed. Additionally, the order of the operations of process 1200 illustrated in FIG. 12 and described below is not intended to be limiting. Operation 1120 may be performed according to process 1200 as illustrated in FIG. 12.

In 1210, the processing device 110 (e.g., the template determination module 403) may determine candidate templates from multiple templates. The templates may be obtained as described in connection with operation 1110 in FIG. 11.

Each of the multiple templates may be associated with a location point and the reference data of each of the multiple templates may be acquired by a laser radar of an acquisition device when the acquisition device arrives at the location point. In some embodiments, the processing device 110 may determine the candidate templates from the multiple templates based on the target location point of a mobile subject for performing a task. For example, the processing device 110 may determine whether a specific template among the multiple templates is associated with the target location point. In response to determining that the specific template is associated with the target location point, the processing device 110 may determine the specific template as a candidate template. In some embodiments, the processing device 110 may determine whether the specific template is associated with the target location point based on the location of the specific template and the location of the target location point. For example, in response to determining that the distance between the location of the specific template and the location of the target location point is less than a threshold (e.g., 20 centimeters, 30 centimeters, 40 centimeters, etc.), the processing device 110 may determine that the specific template is associated with the target location point. As another example, the processing device 110 may determine whether the specific template is associated with the target location point based on the corresponding relationship between the reference data of the specific template and the parameters of the acquisition device for acquiring the reference data (including a pose of the acquisition device) and/or parameters of the specific template. If the position of the acquisition device for acquiring the specific template is the same as the target location point, the processing device 110 may determine that the specific template is associated with the target location point.

In 1220, the processing device 110 (e.g., the template determination module 403) may obtain one or more parameters of a laser radar associated with a candidate template among the candidate templates. The one or more parameters of the laser radar associated with a candidate template may refer to parameters of the laser radar of an acquisition device when the laser radar acquires the reference data of the candidate template at the target location point. The parameters of the laser radar may include the height of the laser radar, the scanning range of the laser radar of the acquisition device, etc.

In 1230, the processing device (e.g., xx) may determine whether the one or more parameters of the laser radar of the acquisition device match one or more parameters of one of the multiple laser radars of the mobile subject.

As used herein, a parameter of the laser radar of the acquisition device matching a parameter of a laser radar of the mobile subject may refer to that a difference between a parameter of a type of the laser radar of the acquisition device matching the parameter of the same type of the laser radar of the mobile subject is less than a threshold or a similarity between a parameter of a type of the laser radar of the acquisition device matching the parameter of the same type of the laser radar of the mobile subject is less than a threshold.

For example, for a specific candidate template among the candidate templates, the processing device **110** may compare the height of the laser radar of the acquisition device for acquiring the reference data of the specific candidate template and the height of each of the multiple laser radars of the mobile subject. If the difference between the height of the laser radar of the acquisition device and the height of a laser radar of the mobile subject is less than a threshold (e.g., 2 millimeters, 6 millimeters, 10 millimeters), the processing device **110** may compare the scanning range of the laser radar of the acquisition device for acquiring the reference data of the specific candidate template and the scanning range of each of the multiple laser radars of the mobile subject. If the similarity between the scanning range of the laser radar of the acquisition device and the scanning range of the laser radar of the mobile subject exceeds a threshold (e.g., 90 degrees, 100 degrees, 10 degrees), the processing device 110 may determine that the specific candidate template may be used to positioning and reserve the specific candidate template. If the similarity between the scanning range of the laser radar of the acquisition device and the scanning range of the laser radar of the mobile subject does not exceed a threshold (e.g., 90 degrees, 100 degrees, 10 degrees), the processing device 110 may determine that the specific candidate template cannot be used to positioning, select another candidate template from the candidate templates, and repeatedly perform operation 1230 until all the candidate templates are selected.

The scanning range of a laser radar may be defined by a maximum scanning angel and a minimum scanning angle. For example, the scanning range of the laser radar of the acquisition device for acquiring the reference data of the specific candidate template may be denoted by a difference between the maximum scanning angle and the minimum scanning angle in a world coordinate system. The scanning range of the laser radar of the mobile subject may be denoted by a difference between the maximum scanning angle and the minimum scanning angle in a world coordinate system.

The similarity between the scanning range of the laser radar of the acquisition device for acquiring the reference data of the specific candidate template and the scanning range of the laser radar of the mobile subject may be denoted by an overlap between the scanning ranges. The overlap between the scanning ranges may be denoted by a difference between the scanning ranges.

For example, the maximum scanning angle and the minimum scanning angle of the laser radar of the acquisition device for acquiring the reference data of the specific candidate template in the world coordinate system may be denoted as Equation (17) as follows: $\left\{\begin{matrix}C α min W = Tc * Lc * {\left[0, 0, {C}_{α min}\right]}^{T} \\ C α max W = Tc * Lc * {\left[0, 0, {C}_{α max}\right]}^{T}\end{matrix}\right. ,$ (17) where *C_{αmin}* refers to the minimum scanning angle of the laser radar of the acquisition device for acquiring the reference data of the specific candidate template in the coordinate system of the laser radar, *C_{αmax}* refers to the maximum scanning angle of the laser radar of the acquisition device for acquiring the reference data of the specific candidate template in a coordinate system of the laser radar, *Tc* refers to a pose of the acquisition device for acquiring the reference data of the specific candidate template in the coordinate system of the acquisition device, *Lc* refers to a relative pose of the laser radar for acquiring the reference data of the specific candidate template relative to the acquisition device, *^{w}C_{αmin}* refers to the minimum scanning angle of the laser radar of the acquisition device for acquiring the reference data of the specific candidate template in the world coordinate system, and *^{w}C_{αmax}* refers to the maximum scanning angle of the laser radar of the acquisition device for acquiring the reference data of the specific candidate template in the world coordinate system.

The scanning range of the laser radar of the acquisition device for acquiring the reference data of the specific candidate template may be denoted by Equation (18) as follows: $Δ C = C α max W - C α min W ,$ (18)

The maximum scanning angle, the minimum scanning angle of the laser radar of the mobile subject in the world coordinate system, and the scanning range of the laser radar of the mobile subject in the world coordinate system may be denoted as Equation (19) as follows: $\left\{\begin{matrix}I α min W = Tt * Li * {\left[0, 0, {I}_{α min}\right]}^{T} \\ I α max W = Tt * Li * {\left[0, 0, {I}_{α max}\right]}^{T} \\ Δ I = I α max W - I α max W\end{matrix}\right. ,$ (19) where *I_{αmin}* refers to the minimum scanning angle of the laser radar of the mobile subject in a coordinate system of the laser radar of the mobile subject, *I_{αmax}* refers to the maximum scanning angle of the laser radar of the mobile subject in the coordinate system of the laser radar, *Tt* refers to a pose of the mobile subject in the coordinate system of the mobile subject, *Li* refers to a relative pose of the laser radar relative to the mobile subject, ^{w}*I_{αmin}* refers to the minimum scanning angle of the laser radar of the mobile subject in the world coordinate system, and ^{w}*I_{αmax}* refers to the maximum scanning angle of the laser radar of the mobile subject in the world coordinate system.

In some embodiments, if the maximum scanning angle is less than the minimum scanning angle, the maximum scanning angle may be modified by adding 360 degrees, such that the maximum scanning angle and the minimum scanning angle may be in a range from -180 degrees and 180 degrees.

The overlap between the scanning ranges may be denoted by Equation (20) as follows: $Δθ = ΔC - ΔI ,$ (20).

In 1240, the processing device (e.g., the template determination module 403) may determine a target template based on the candidate template.

According to operations 1220 and 1230, the processing device 110 may determine at least one candidate template from the multiple candidate templates. One or more parameters of the laser radar for acquiring the reference data of the at least candidate template may match the one or more parameters of one of the multiple laser radars of the mobile subject.

In some embodiments, the processing device 110 may determine one of the at least one candidate template whose distance from the target location point is minimum may be designated as the target template.

In some embodiments, the processing device 110 may determine one of the at least one candidate template and a difference between at least one of one or more parameters of the laser radar for acquiring the reference data of the one of the at least one candidate template and the at least one of the one or more parameters of one of the multiple laser radars of the mobile subject is minimum or a similarity between at least one of one or more parameters of the laser radar for acquiring the reference data of the one of the at least candidate template and the at least one of the one or more parameters of one of the multiple laser radars of the mobile subject is maximum. For example, the at least one candidate template may include a candidate template 1 and a candidate template 2. A difference between the height of the laser radar for acquiring the reference data of the candidate template 1 and a height of a laser radar of the mobile subject is less than the height of the laser radar for acquiring the reference data of the candidate template 2 and a height of a laser radar of the mobile subject, and/or the overlap between the scanning range of the laser radar for acquiring the reference data of the candidate template 1 and the scanning range of a laser radar of the mobile subject exceeds the overlap between the scanning range of the laser radar for acquiring the reference data of the candidate template 2 and the scanning range of a laser radar of the mobile subject, the candidate template 1 may be designated as the target template.

In 1250, the processing device (e.g., the template determination module 403 or the pose determination module 405) may determine a target laser radar from the multiple laser radars based on the target template.

The processing device 110 may designate one of the multiple laser radars whose parameters are matched with the parameters of the laser radar for acquiring the reference data of the target template as the target laser radar.

In some embodiments, there may be more than one laser radar whose parameters are matched with the parameters of the laser radar for acquiring the reference data of the target template. The processing device120 may determine the target laser radar from the more than one laser radar of the mobile subject. For example, a difference between at least one of one or more parameters of the laser radar for acquiring the reference data of the target template and the at least one of the one or more parameters of one of the target laser radar of the mobile subject may be minimum or a similarity between at least one of one or more parameters of the laser radar for acquiring the reference data of the target template and the at least one of the one or more parameters of the target laser radar of the mobile subject is maximum.

According to some embodiments of the present disclosure, by determining a target template and a target laser radar according to parameters of the laser radars, the target laser radar may be more similar to the laser radar for acquiring the reference data of the target template, which may improve accuracy of the matching between the reference data of the target template and the laser data of the target template, thereby improving an accuracy for positioning.

It should be noted that the above description is merely provided for the purposes of illustration, and not intended to limit the scope of the present disclosure. For persons having ordinary skills in the art, multiple variations or modifications may be made under the teachings of the present disclosure. However, those variations and modifications do not depart from the scope of the present disclosure.

Moreover, certain terminology has been used to describe embodiments of the present disclosure. For example, the terms "one embodiment," "an embodiment," and/or "some embodiments" mean that a particular feature, structure, or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures, or characteristics may be combined as suitable in one or more embodiments of the present disclosure.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

Further, it will be appreciated by one skilled in the art, aspects of the present disclosure may be illustrated and described herein in any of a number of patentable classes or context including any new and useful process, machine, manufacture, or colocation of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "unit," "module," or "system." Furthermore, aspects of the present disclosure may take the form of a computer program product embodied in one or more computer readable media having computer-readable program code embodied thereon.

A computer readable signal medium may include a propagated data signal with computer readable program code embodied therein, for example, in baseband or as part of a carrier wave. Such a propagated signal may take any of a variety of forms, including electromagnetic, optical, or the like, or any suitable combination thereof. A computer readable signal medium may be any computer readable medium that is not a computer readable storage medium and that may communicate, propagate, or transport a program for use by or in connection with an instruction execution system, apparatus, or device. Program code embodied on a computer readable signal medium may be transmitted using any appropriate medium, including wireless, wireline, optical fiber cable, RF, or the like, or any suitable combination of the foregoing.

Computer program code for carrying out operations for aspects of the present disclosure may be written in a combination of one or more programming languages, including an object oriented programming language such as Java, Scala, Smalltalk, Eiffel, JADE, Emerald, C++, C#, VB. NET, Python or the like, conventional procedural programming languages, such as the "C" programming language, Visual Basic, Fortran 2003, Perl, COBOL 2002, PHP, ABAP, dynamic programming languages such as Python, Ruby, and Groovy, or other programming languages. The program code may execute entirely on the user's computer, partly on the user's computer, as a stand-alone software package, partly on the user's computer, and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS).

Furthermore, the recited order of processing elements or sequences, or the use of numbers, letters, or other designations thereof, are not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, e.g., an installation on an existing server or mobile device.

## Claims

1. A system (100), comprising:
at least one storage device (220) including a set of instructions;
at least one processor (210) in communication with the at least one storage device (220), wherein when executing the set of instructions, the at least one processor (210) is configured to cause the system (100) to perform operations including:
obtaining odometer data acquired by an odometer of a mobile subject at a current time;
obtaining laser data of a scene around the mobile subject acquired, at the current time, by a laser radar of the mobile subject;
obtaining a reference map of a region where the scene is located;
determining a first matching result based on the reference map and the laser data;
reconstructing a sub map reflecting the scene based on the laser data;
determining a second matching result based on the sub map and the laser data;
determining a target pose of the mobile subject based on at least two of the odometer data, the first matching result, or the second matching result, the determining a target pose of the mobile subject including:
determining one or more constraint items by determining whether the odometer data is abnormal or determining whether the first matching result satisfies a condition, wherein
the one or more constraint items include at least two of: a first constraint item that is constructed based on the first matching result;
a second constraint item that is constructed based on the second matching result; or
a third constraint item that is constructed based on the odometer data, wherein the first constraint item is configured to constrain an error between a first estimated pose associated with the first matching result and a desired pose at a first time point, the second constraint item is configured to constrain an error between an estimated second pose change associated with the second matching result and a desired pose change at a second time point relative to a previous second time point, and the third constraint item is configured to constrain an error between an estimated third pose change corresponding to the odometer data and an optimization pose change at the first time point relative to a previous first time point;
the odometer data being abnormal refers to abnormal odometer data caused by a slipping of the mobile subject or a fault of an odometer of the mobile subject;
in response to determining that the odometer data is abnormal, the one or more constraint items include the first constraint item and the second constraint item; and
in response to determining that the first matching result does not satisfy the condition, the one or more constraint items include the second constraint item and the third constraint item;
determining, based on the one or more constraint items, the target pose at the current time.

2. The system (100) of claim 1, further comprising:
determining whether a pose change at the current time relative to a previous time exceeds a change threshold based on the odometer data or a difference between the current time and the previous time exceeds a time threshold; and
in response to determining that the pose change exceeds the change threshold based on the odometer data or the difference between the current time and the previous time exceeds the time threshold, determining the target pose at the current time based on the at least two of the odometer data, the first matching result, and the second matching result.

3. The system (100) of claim 1, further comprising:
determining whether a pose change at the current time relative to a previous time exceeds a change threshold based on the odometer data or a difference between the current time and the previous time exceeds a time threshold; and
in response to determining that the pose change does not exceed the change threshold based on the odometer data and the difference between the current time and the previous time does not exceed the time threshold, determining the target pose at the current time based on the odometer data and a target pose of the mobile subject at the previous time.

4. The system (100) of claim 1, wherein the determining a first matching result based on the reference map with the laser data includes:
determining a first portion of the laser data from the laser data, the first portion of the laser data representing one or more original objects in the reference map and not in the sub map; and
determining the first matching result by matching the reference map with the first portion of the laser data.

5. The system (100) of claim 1, wherein the determining a second matching result based on the sub map with the laser data includes:
determining a second portion of the laser data from the laser data, the second portion of the laser data representing one or more new objects in the sub map and not in the reference map; and
determining the second matching result by matching the sub map with the second portion of the laser data.

6. The system (100) of claim 1, wherein the determining, based on the one or more constraint items, the target pose at the current time includes:
determining a pose change at a time point closest to the current time by optimizing the one or more constraint items; and
determining, based on the pose change, the odometer data at the current time, and odometer data at the time point, the target pose at the current time.

7. The system (100) of claim 1, wherein the determining whether the odometer data is abnormal includes:
determining, based on the first matching result, one or more first pose changes at one or more consecutive time points before the current time;
determining, based on the odometer data, one or more third pose changes at the one or more consecutive time points; and
determining that the odometer data is abnormal in response to determining that a difference between each of the one or more first pose changes and one of the one or more third pose changes at a same time point among the one or more consecutive time points exceeds a difference threshold.

8. The system (100) of claim 1, wherein the determining whether the odometer data is abnormal includes:
in response to determining that the first matching result does not satisfy the condition,
determining, based on the second matching result, one or more second pose changes at one or more consecutive time points before the current time;
determining, based on the odometer data, one or more third pose changes at the one or more consecutive time points; and
determining that the odometer data is abnormal in response to determining that a difference between each of the one or more second pose changes and one of the one or more third pose changes at a same time point among the one or more consecutive time points exceeds a difference threshold.

9. The (100) system of claim 1, wherein the condition includes a score of the first matching result exceeding a score threshold and a reference object being scanned by the laser radar when the laser radar acquires the laser data, wherein the score of the first matching result indicates a matching degree between the laser data and the reference map.

10. The (100) system of claim 1, wherein the laser data includes one or more first frames each of which corresponds to a first timestamp in a time range between a previous time and the current time;
the first matching result includes one or more first estimated poses each of which corresponds to a first timestamp of a first frame in the one or more first frames; and
the first constraint item is constructed based on a difference between the first estimated pose at the first time point in the time range and the desired pose at the first time point.

11. The (100) system of claim 1, wherein the laser data includes one or more second frames each of which corresponds to a second timestamp in a time range between a previous time and the current time;
the second matching result includes one or more second estimated poses each of which corresponds to a second timestamp of a second frame in the one or more second frames; and
the second constraint item is constructed based on a difference between the estimated second pose change at the second time point in the time range and the desired pose change at the second time point.

12. The (100) system of claim 1, wherein
when the odometer data is abnormal, the constraint items determined based on the odometer data is removed or not constructed in an optimization model; and
when the first matching result is abnormal, the constraint items determined based on the first matching result is removed or not constructed in the optimization model.

13. The system (100) of claim 1, wherein the determining that the first matching result does not satisfy the condition includes:
determining that a score of the first matching result is less than a threshold; and
determining that the laser data does not represent a reference object.

14. A method implemented on a computing device (200) including at least one processor (210) and a storage device (220), the method comprising:
obtaining odometer data acquired by an odometer of a mobile subject at a current time;
obtaining laser data of a scene around the mobile subject acquired, at the current time, by a laser radar of the mobile subject;
obtaining a reference map of a region where the scene is located;
determining a first matching result based on the reference map and the laser data;
reconstructing a sub map reflecting the scene based on the laser data;
determining a second matching result based on the sub map and the laser data; and
determining a target pose of the mobile subject based on at least two of the odometer data, the first matching result, or the second matching result, the determining the target pose of the mobile subject including:
determining one or more constraint items, wherein
the one or more constraint items include at least two of: a first constraint item that is constructed based on the first matching result;
a second constraint item that is constructed based on the second matching result; or
a third constraint item that is constructed based on the odometer data, wherein the first constraint item is configured to constrain an error between a first estimated pose associated with the first matching result and a desired pose at a first time point, the second constraint item is configured to constrain an error between an estimated second pose change associated with the second matching result and a desired pose change at a second time point relative to a previous second time point, and the third constraint item is configured to constrain an error between an estimated third pose change corresponding to the odometer data and an optimization pose change at the first time point relative to a previous first time point;
the odometer data being abnormal refers to abnormal odometer data caused by a slipping of the mobile subject or a fault of an odometer of the mobile subject;
in response to determining that the odometer data is abnormal, the one or more constraint items include the first constraint item and the second constraint item; and
in response to determining that the first matching result does not satisfy the condition, the one or more constraint items include the second constraint item and the third constraint item
determining, based on the one or more constraint items, the target pose at the current time.

15. A computer-readable storage (250) medium storing computer programs, wherein the computer programs are executed by a processor (210) to implement the method including operations including:
obtaining odometer data acquired by an odometer of a mobile subject at a current time;
obtaining laser data of a scene around the mobile subject acquired, at the current time, by a laser radar of the mobile subject;
obtaining a reference map of a region where the scene is located;
determining a first matching result based on the reference map and the laser data;
reconstructing a sub map reflecting the scene based on the laser data;
determining a second matching result based on the sub map and the laser data; and
determining a target pose of the mobile subject based on at least two of the odometer data, the first matching result, or the second matching result, the determining the target pose of the mobile subject including:
determining one or more constraint items by determining whether the odometer data is abnormal or determining whether the first matching result satisfies a condition, wherein
the one or more constraint items include at least two of: a first constraint item that is constructed based on the first matching result;
a second constraint item that is constructed based on the second matching result; or
a third constraint item that is constructed based on the odometer data, wherein the first constraint item is configured to constrain an error between a first estimated pose associated with the first matching result and a desired pose at a first time point, the second constraint item is configured to constrain an error between an estimated second pose change associated with the second matching result and a desired pose change at a second time point relative to a previous second time point, and the third constraint item is configured to constrain an error between an estimated third pose change corresponding to the odometer data and an optimization pose change at the first time point relative to a previous first time point;
the odometer data being abnormal refers to abnormal odometer data caused by a slipping of the mobile subject or a fault of an odometer of the mobile subject;
in response to determining that the odometer data is abnormal, the one or more constraint items include the first constraint item and the second constraint item; and
in response to determining that the first matching result does not satisfy the condition, the one or more constraint items include the second constraint item and the third constraint item;
determining, based on the one or more constraint items, the target pose at the current time.

## Patentansprüche

1. System (100), umfassend:
mindestens eine Speichervorrichtung (220), die einen Satz von Anweisungen einschließt;
mindestens einen Prozessor (210) in Kommunikation mit der mindestens einen Speichervorrichtung (220), wobei der mindestens eine Prozessor (210) so konfiguriert ist, dass er, wenn er den Satz von Anweisungen ausführt, das System (100) dazu veranlasst, Operationen durchzuführen, die Folgendes einschließen:
Erlangen von Wegstreckenzählerdaten, die von einem Wegstreckenzähler eines mobilen Subjekts zu einem aktuellen Zeitpunkt erfasst werden;
Erlangen von Laserdaten einer Szene um das mobile Objekt herum, die, zum aktuellen Zeitpunkt, von einem Laserradar des mobilen Objekts erfasst werden;
Erlangen einer Referenzkarte einer Region, in der sich die Szene befindet;
Feststellen eines ersten Abgleichsergebnisses auf Grundlage der Referenzkarte und der Laserdaten;
Rekonstruieren einer Teilkarte, welche die Szene widerspiegelt, auf Grundlage der Laserdaten;
Feststellen eines zweiten Abgleichsergebnisses auf Grundlage der Teilkarte und der Laserdaten;
Feststellen einer Zielposition des mobilen Subjekts auf Grundlage von mindestens zwei von den Wegstreckendaten, dem ersten Abgleichsergebnis oder dem zweiten Abgleichsergebnis, wobei das Feststellen einer Zielposition des mobilen Subjekts Folgendes einschließt:
Feststellen eines oder mehrerer Beschränkungselemente durch Feststellen, ob die Wegstreckenzählerdaten abnormal sind oder Feststellen, ob das erste Abgleichsergebnis eine Bedingung erfüllt, wobei
das eine oder die mehreren Beschränkungselement(e) mindestens zwei von Folgendem einschließen: ein erstes Beschränkungselement, das auf Grundlage des ersten Abgleichsergebnisses erstellt wird;
ein zweites Beschränkungselement, das auf Grundlage des zweiten Abgleichsergebnisses erstellt wird; oder
ein drittes Beschränkungselement, das auf Grundlage der Wegstreckenzählerdaten erstellt wird, wobei das erste Beschränkungselement dafür konfiguriert ist, einen Fehler zwischen einer ersten geschätzten Position, die mit dem ersten Abgleichsergebnis verknüpft ist, und einer gewünschten Position zu einem ersten Zeitpunkt zu beschränken, das zweite Beschränkungselement dafür konfiguriert ist, einen Fehler zwischen einer geschätzten zweiten Positionsänderung, die mit dem zweiten Abgleichsergebnis verknüpft ist, und einer gewünschten Positionsänderung zu einem zweiten Zeitpunkt relativ zu einem vorherigen zweiten Zeitpunkt zu beschränken, und das dritte Beschränkungselement dafür konfiguriert ist, einen Fehler zwischen einer geschätzten dritten Positionsänderung, die den Wegstreckenzählerdaten entspricht, und einer Optimierungspositionsänderung zum ersten Zeitpunkt relativ zu einem vorherigen ersten Zeitpunkt zu beschränken;
dass die Wegstreckenzählerdaten abnormal sind, sich auf abnormale Wegstreckenzählerdaten bezieht, die durch ein Rutschen des mobilen Objekts oder einen Defekt eines Wegstreckenzählers des mobilen Objekts verursacht werden;
als Reaktion auf das Feststellen, dass die Wegstreckenzählerdaten abnormal sind, das eine oder die mehreren Beschränkungselemente das erste Beschränkungselement und das zweite Beschränkungselement einschließen; und
als Reaktion auf das Feststellen, dass das erste Abgleichsergebnis die Bedingung nicht erfüllt, das eine oder die mehreren Beschränkungselement(e) das zweite Beschränkungselement und das dritte Beschränkungselement einschließen;
Feststellen der Zielposition zum aktuellen Zeitpunkt, auf Grundlage des einen oder der mehreren Beschränkungselemente.

2. System (100) nach Anspruch 1, weiter umfassend:
Feststellen, ob eine Positionsänderung zum aktuellen Zeitpunkt relativ zu einem vorherigen Zeitpunkt einen Änderungsschwellenwert überschreitet, auf Grundlage der Wegstreckendaten, oder eine Differenz zwischen dem aktuellen Zeitpunkt und dem vorherigen Zeitpunkt einen Zeitschwellenwert überschreitet; und
als Reaktion auf das Feststellen, dass die Positionsänderung den Änderungsschwellenwert überschreitet, auf Grundlage der Wegstreckendaten, oder dass die Differenz zwischen dem aktuellen Zeitpunkt und dem vorherigen Zeitpunkt den Zeitschwellenwert überschreitet, Feststellen der Zielposition zum aktuellen Zeitpunkt auf Grundlage der mindestens zwei von den Wegstreckenzählerdaten, dem ersten Abgleichsergebnis und dem zweiten Abgleichsergebnis.

3. System (100) nach Anspruch 1, weiter umfassend:
Feststellen, ob eine Positionsänderung zum aktuellen Zeitpunkt relativ zu einem vorherigen Zeitpunkt einen Änderungsschwellenwert überschreitet, auf Grundlage der Wegstreckendaten, oder eine Differenz zwischen dem aktuellen Zeitpunkt und dem vorherigen Zeitpunkt einen Zeitschwellenwert überschreitet; und
als Reaktion auf das Feststellen, dass die Positionsänderung den Änderungsschwellenwert nicht überschreitet, auf Grundlage der Wegstreckendaten, und die Differenz zwischen dem aktuellen Zeitpunkt und dem vorherigen Zeitpunkt den Zeitschwellenwert nicht überschreitet, Feststellen der Zielposition zum aktuellen Zeitpunkt auf Grundlage der Wegstreckendaten und einer Zielposition des mobilen Subjekts zum vorherigen Zeitpunkt.

4. System (100) nach Anspruch 1, wobei das Feststellen eines ersten Abgleichsergebnisses auf Grundlage der Referenzkarte mit den Laserdaten Folgendes einschließt:
Feststellen eines ersten Teils der Laserdaten aus den Laserdaten, wobei der erste Teil der Laserdaten ein oder mehrere Originalobjekte in der Referenzkarte und nicht in der Teilkarte darstellt; und
Feststellen des ersten Abgleichsergebnisses durch Abgleichen der Referenzkarte mit dem ersten Teil der Laserdaten.

5. System (100) nach Anspruch 1, wobei das Feststellen eines zweiten Abgleichsergebnisses auf Grundlage der Teilkarte mit den Laserdaten Folgendes einschließt:
Feststellen eines zweiten Teils der Laserdaten aus den Laserdaten, wobei der zweite Teil der Laserdaten ein oder mehrere neue Objekte in der Teilkarte und nicht in der Referenzkarte darstellt; und
Feststellen des zweiten Abgleichsergebnisses durch Abgleichen der Teilkarte mit dem zweiten Teil der Laserdaten.

6. System (100) nach Anspruch 1, wobei das Feststellen der Zielposition zum aktuellen Zeitpunkt, auf Grundlage des einen oder der mehreren Beschränkungselemente, Folgendes einschließt:
Feststellen einer Positionsänderung zu einem Zeitpunkt, der dem aktuellen Zeitpunkt am nächsten ist, durch Optimieren des einen oder der mehreren Beschränkungselemente und
Feststellen, auf Grundlage der Positionsänderung, der Wegstreckenzählerdaten zum aktuellen Zeitpunkt und der Wegstreckenzählerdaten zum Zeitpunkt, der Zielposition zum aktuellen Zeitpunkt.

7. System (100) nach Anspruch 1, wobei das Feststellen, ob die Wegstreckenzählerdaten abnormal sind, Folgendes einschließt:
Feststellen, auf Grundlage des ersten Abgleichsergebnisses, von einer oder mehreren ersten Positionsänderungen zu einem oder mehreren aufeinanderfolgenden Zeitpunkten vor dem aktuellen Zeitpunkt;
Feststellen, auf Grundlage der Wegstreckenzählerdaten, von einer oder mehreren dritten Positionsänderungen zu dem einen oder den mehreren aufeinanderfolgenden Zeitpunkten; und
Feststellen, dass die Wegstreckenzählerdaten abnormal sind, als Reaktion auf das Feststellen, dass eine Differenz zwischen jeder von der einen oder den mehreren ersten Positionsänderungen und einer von der einen oder den mehreren dritten Positionsänderungen zu einem gleichen Zeitpunkt unter dem einen oder den mehreren aufeinanderfolgenden Zeitpunkten einen Differenzschwellenwert überschreitet.

8. System (100) nach Anspruch 1, wobei das Feststellen, ob die Wegstreckenzählerdaten abnormal sind, Folgendes einschließt:
als Reaktion auf das Feststellen, dass das erste Abgleichsergebnis die Bedingung nicht erfüllt,
Feststellen, auf Grundlage des zweiten Abgleichsergebnisses, einer oder mehrerer zweiter Positionsänderungen zu einem oder mehreren aufeinanderfolgenden Zeitpunkten vor dem aktuellen Zeitpunkt;
Feststellen, auf Grundlage der Wegstreckenzählerdaten, von einer oder mehreren dritten Positionsänderungen zu dem einen oder den mehreren aufeinanderfolgenden Zeitpunkten; und
Feststellen, dass die Wegstreckenzählerdaten abnormal sind, als Reaktion auf das Feststellen, dass eine Differenz zwischen jeder von der einen oder den mehreren zweiten Positionsänderungen und einer von der einen oder den mehreren dritten Positionsänderungen zum gleichen Zeitpunkt unter dem einen oder den mehreren aufeinanderfolgenden Zeitpunkten einen Differenzschwellenwert überschreitet.

9. System (100) nach Anspruch 1, wobei die Bedingung einschließt, dass ein Wert des ersten Abgleichsergebnisses einen Werteschwellenwert überschreitet und ein Referenzobjekt durch das Laserradar abgetastet wird, wenn das Laserradar die Laserdaten erfasst, wobei der Wert des ersten Abgleichsergebnisses einen Übereinstimmungsgrad zwischen den Laserdaten und der Referenzkarte angibt.

10. System (100) nach Anspruch 1, wobei die Laserdaten ein oder mehrere erste Einzelbilder einschließen, von denen jedes einem ersten Zeitstempel in einem Zeitbereich zwischen einem vorherigen Zeitpunkt und dem aktuellen Zeitpunkt entspricht;
das erste Abgleichsergebnis eine oder mehrere erste geschätzte Positionen einschließt, von denen jede einem ersten Zeitstempel eines ersten Einzelbildes in dem einen oder den mehreren ersten Einzelbildern entspricht; und
das erste Beschränkungselement auf Grundlage einer Differenz zwischen der ersten geschätzten Position zum ersten Zeitpunkt im Zeitbereich und der gewünschten Position zum ersten Zeitpunkt erstellt wird.

11. System (100) nach Anspruch 1, wobei die Laserdaten ein oder mehrere zweite Einzelbilder einschließen, von denen jedes einem zweiten Zeitstempel in einem Zeitbereich zwischen einem vorherigen Zeitpunkt und dem aktuellen Zeitpunkt entspricht;
das zweite Abgleichsergebnis eine oder mehrere geschätzte zweite Positionen einschließt, von denen jede einem zweiten Zeitstempel eines zweiten Einzelbildes in dem einen oder den mehreren zweiten Einzelbildern entspricht; und
das zweite Beschränkungselement auf Grundlage einer Differenz zwischen der geschätzten zweiten Positionsänderung zum zweiten Zeitpunkt im Zeitbereich und der gewünschten Positionsänderung zum zweiten Zeitpunkt erstellt wird.

12. System (100) nach Anspruch 1, wobei,
wenn die Wegstreckenzählerdaten abnormal sind, die auf Grundlage der Wegstreckenzählerdaten festgestellten Beschränkungselemente entfernt oder nicht in einem Optimierungsmodell erstellt werden; und
wenn das erste Abgleichsergebnis abnormal ist, die auf Grundlage des ersten Abgleichsergebnisses festgestellten Beschränkungselemente entfernt oder nicht im Optimierungsmodell erstellt werden.

13. System (100) nach Anspruch 1, wobei das Feststellen, dass das erste Abgleichsergebnis die Bedingung nicht erfüllt, Folgendes einschließt:
Feststellen, dass der Wert des ersten Abgleichsergebnisses geringer als ein Schwellenwert ist; und
Feststellen, dass die Laserdaten kein Referenzobjekt darstellen.

14. Verfahren, das auf einer Rechenvorrichtung (200) umgesetzt wird, die mindestens einen Prozessor (210) und eine Speichervorrichtung (220) einschließt, wobei das Verfahren Folgendes umfasst:
Erlangen von Wegstreckenzählerdaten, die von einem Wegstreckenzähler eines mobilen Subjekts zu einem aktuellen Zeitpunkt erfasst werden;
Erlangen von Laserdaten einer Szene um das mobile Objekt herum, die, zum aktuellen Zeitpunkt, von einem Laserradar des mobilen Objekts erfasst werden;
Erlangen einer Referenzkarte einer Region, in der sich die Szene befindet;
Feststellen eines ersten Abgleichsergebnisses auf Grundlage der Referenzkarte und der Laserdaten;
Rekonstruieren einer Teilkarte, welche die Szene widerspiegelt, auf Grundlage der Laserdaten;
Feststellen eines zweiten Abgleichsergebnisses auf Grundlage der Teilkarte und der Laserdaten; und
Feststellen einer Zielposition des mobilen Subjekts auf Grundlage von mindestens zwei von den Wegstreckendaten, dem ersten Abgleichsergebnis oder dem zweiten Abgleichsergebnis, wobei das Feststellen der Zielposition des mobilen Subjekts Folgendes einschließt:
Feststellen eines oder mehrerer Beschränkungselemente, wobei
das eine oder die mehreren Beschränkungselement(e) mindestens zwei von Folgendem einschließen: ein erstes Beschränkungselement, das auf Grundlage des ersten Abgleichsergebnisses erstellt wird;
ein zweites Beschränkungselement, das auf Grundlage des zweiten Abgleichsergebnisses erstellt wird; oder
ein drittes Beschränkungselement, das auf Grundlage der Wegstreckenzählerdaten erstellt wird, wobei das erste Beschränkungselement dafür konfiguriert ist, einen Fehler zwischen einer ersten geschätzten Position, die mit dem ersten Abgleichsergebnis verknüpft ist, und einer gewünschten Position zu einem ersten Zeitpunkt zu beschränken, das zweite Beschränkungselement dafür konfiguriert ist, einen Fehler zwischen einer geschätzten zweiten Positionsänderung, die mit dem zweiten Abgleichsergebnis verknüpft ist, und einer gewünschten Positionsänderung zu einem zweiten Zeitpunkt relativ zu einem vorherigen zweiten Zeitpunkt zu beschränken, und das dritte Beschränkungselement dafür konfiguriert ist, einen Fehler zwischen einer geschätzten dritten Positionsänderung, die den Wegstreckenzählerdaten entspricht, und einer Optimierungspositionsänderung zum ersten Zeitpunkt relativ zu einem vorherigen ersten Zeitpunkt zu beschränken;
dass die Wegstreckenzählerdaten abnormal sind, sich auf abnormale Wegstreckenzählerdaten bezieht, die durch ein Rutschen des mobilen Objekts oder einen Defekt eines Wegstreckenzählers des mobilen Objekts verursacht werden;
als Reaktion auf das Feststellen, dass die Wegstreckenzählerdaten abnormal sind, das eine oder die mehreren Beschränkungselemente das erste Beschränkungselement und das zweite Beschränkungselement einschließen; und
als Reaktion auf das Feststellen, dass das erste Abgleichsergebnis die Bedingung nicht erfüllt, das eine oder die mehreren Beschränkungselement(e) das zweite Beschränkungselement und das dritte Beschränkungselement einschließen;
Feststellen der Zielposition zum aktuellen Zeitpunkt, auf Grundlage des einen oder der mehreren Beschränkungselemente.

15. Computerlesbares Speicher- (250) -medium, das Computerprogramme speichert, wobei die Computerprogramme von einem Prozessor (210) ausgeführt werden, um das Verfahren umzusetzen, das Operationen einschließt, die Folgendes einschließen:
Erlangen von Wegstreckenzählerdaten, die von einem Wegstreckenzähler eines mobilen Subjekts zu einem aktuellen Zeitpunkt erfasst werden;
Erlangen von Laserdaten einer Szene um das mobile Objekt herum, die, zum aktuellen Zeitpunkt, von einem Laserradar des mobilen Objekts erfasst werden;
Erlangen einer Referenzkarte einer Region, in der sich die Szene befindet;
Feststellen eines ersten Abgleichsergebnisses auf Grundlage der Referenzkarte und der Laserdaten;
Rekonstruieren einer Teilkarte, welche die Szene widerspiegelt, auf Grundlage der Laserdaten;
Feststellen eines zweiten Abgleichsergebnisses auf Grundlage der Teilkarte und der Laserdaten; und
Feststellen einer Zielposition des mobilen Subjekts auf Grundlage von mindestens zwei von den Wegstreckendaten, dem ersten Abgleichsergebnis oder dem zweiten Abgleichsergebnis, wobei das Feststellen der Zielposition des mobilen Subjekts Folgendes einschließt:
Feststellen eines oder mehrerer Beschränkungselemente durch Feststellen, ob die Wegstreckenzählerdaten abnormal sind oder Feststellen, ob das erste Abgleichsergebnis eine Bedingung erfüllt, wobei
das eine oder die mehreren Beschränkungselement(e) mindestens zwei von Folgendem einschließen: ein erstes Beschränkungselement, das auf Grundlage des ersten Abgleichsergebnisses erstellt wird;
ein zweites Beschränkungselement, das auf Grundlage des zweiten Abgleichsergebnisses erstellt wird; oder
ein drittes Beschränkungselement, das auf Grundlage der Wegstreckenzählerdaten erstellt wird, wobei das erste Beschränkungselement dafür konfiguriert ist, einen Fehler zwischen einer ersten geschätzten Position, die mit dem ersten Abgleichsergebnis verknüpft ist, und einer gewünschten Position zu einem ersten Zeitpunkt zu beschränken, das zweite Beschränkungselement dafür konfiguriert ist, einen Fehler zwischen einer geschätzten zweiten Positionsänderung, die mit dem zweiten Abgleichsergebnis verknüpft ist, und einer gewünschten Positionsänderung zu einem zweiten Zeitpunkt relativ zu einem vorherigen zweiten Zeitpunkt zu beschränken, und das dritte Beschränkungselement dafür konfiguriert ist, einen Fehler zwischen einer geschätzten dritten Positionsänderung, die den Wegstreckenzählerdaten entspricht, und einer Optimierungspositionsänderung zum ersten Zeitpunkt relativ zu einem vorherigen ersten Zeitpunkt zu beschränken;
dass die Wegstreckenzählerdaten abnormal sind, sich auf abnormale Wegstreckenzählerdaten bezieht, die durch ein Rutschen des mobilen Objekts oder einen Defekt eines Wegstreckenzählers des mobilen Objekts verursacht werden;
als Reaktion auf das Feststellen, dass die Wegstreckenzählerdaten abnormal sind, das eine oder die mehreren Beschränkungselemente das erste Beschränkungselement und das zweite Beschränkungselement einschließen; und
als Reaktion auf das Feststellen, dass das erste Abgleichsergebnis die Bedingung nicht erfüllt, das eine oder die mehreren Beschränkungselement(e) das zweite Beschränkungselement und das dritte Beschränkungselement einschließen;
Feststellen der Zielposition zum aktuellen Zeitpunkt, auf Grundlage des einen oder der mehreren Beschränkungselemente.

## Revendications

1. Système (100), comprenant :
au moins un dispositif de stockage (220) incluant un ensemble d'instructions ; et
au moins un processeur (210) en communication avec le au moins un dispositif de stockage (220), dans lequel, lors de l'exécution de l'ensemble d'instructions, le au moins un processeur (210) est configuré pour amener le système (100) à effectuer des opérations incluant :
l'obtention de données odométriques acquises par un odomètre d'un sujet mobile à un instant présent ;
l'obtention de données laser d'une scène autour du sujet mobile acquises, à l'instant présent, par un radar laser du sujet mobile ;
l'obtention d'une carte de référence d'une région où se situe la scène ;
la détermination d'un premier résultat de correspondance sur la base de la carte de référence et des données laser ;
la reconstruction d'une sous-carte reflétant la scène sur la base des données laser ;
la détermination d'un second résultat de correspondance sur la base de la sous-carte et des données laser ;
la détermination d'une pose cible du sujet mobile sur la base d'au moins deux des données odométriques, du premier résultat de correspondance ou du second résultat de correspondance, la détermination d'une pose cible du sujet mobile incluant :
la détermination d'un ou plusieurs éléments de contrainte en déterminant si les données odométriques sont anormales ou en déterminant si le premier résultat de correspondance satisfait à une condition, dans lequel
les un ou plusieurs éléments de contrainte incluent au moins deux parmi : un premier élément de contrainte construit sur la base du premier résultat de correspondance ;
un deuxième élément de contrainte construit sur la base du second résultat de correspondance ; ou
un troisième élément de contrainte qui est construit sur la base des données odométriques, dans lequel le premier élément de contrainte est configuré pour contraindre une erreur entre une première pose estimée associée au premier résultat de correspondance et une pose souhaitée à un premier point temporel, le deuxième élément de contrainte est configuré pour contraindre une erreur entre un deuxième changement de pose estimé associé au second résultat de correspondance et un changement de pose souhaité à un second point temporel par rapport à un second point temporel précédent, et le troisième élément de contrainte est configuré pour contraindre une erreur entre un troisième changement de pose estimé correspondant aux données odométriques et un changement de pose d'optimisation au premier point temporel par rapport à un premier point temporel précédent ;
les données odométriques anormales font référence à des données odométriques anormales causées par un dérapage du sujet mobile ou par un défaut d'un odomètre du sujet mobile ;
en réponse à la détermination que les données odométriques sont anormales, les un ou plusieurs éléments de contrainte incluent le premier élément de contrainte et le deuxième élément de contrainte ; et
en réponse à la détermination que le premier résultat de correspondance ne satisfait pas la condition, les un ou plusieurs éléments de contrainte incluent le deuxième élément de contrainte et le troisième élément de contrainte ;
la détermination, sur la base des un ou plusieurs éléments de contrainte, de la pose cible à l'instant présent.

2. Système (100) selon la revendication 1, comprenant en outre :
la détermination si un changement de position à l'instant présent par rapport à un instant précédent dépasse un seuil de changement sur la base des données odométriques ou si une différence entre l'instant présent et l'instant précédent dépasse un seuil temporel ; et
en réponse à la détermination que le changement de pose dépasse le seuil de changement sur la base des données odométriques ou que la différence entre l'instant présent et l'instant précédent dépasse le seuil temporel, la détermination de la pose cible à l'instant présent sur la base des au moins deux parmi les données odométriques, le premier résultat de correspondance et le second résultat de correspondance.

3. Système (100) selon la revendication 1, comprenant en outre :
la détermination si un changement de position à l'instant présent par rapport à un instant précédent dépasse un seuil de changement sur la base des données odométriques ou si une différence entre l'instant présent et l'instant précédent dépasse un seuil temporel ; et
en réponse à la détermination que le changement de pose ne dépasse pas le seuil de changement sur la base des données odométriques et que la différence entre l'instant présent et l'instant précédent ne dépasse pas le seuil temporel, la détermination de la pose cible à l'instant présent sur la base des données odométriques et d'une pose cible du sujet mobile à l'instant précédent.

4. Système (100) selon la revendication 1, dans lequel la détermination d'un premier résultat de correspondance sur la base de la carte de référence à l'aide des données laser inclut :
la détermination d'une première partie des données laser à partir des données laser, la première partie des données laser représentant un ou plusieurs objets d'origine dans la carte de référence et non dans la sous-carte ; et
la détermination du premier résultat de correspondance en faisant correspondre la carte de référence avec la première partie des données laser.

5. Système (100) selon la revendication 1, dans lequel la détermination d'un second résultat de correspondance sur la base de la sous-carte à l'aide des données laser inclut :
la détermination d'une seconde partie des données laser à partir des données laser, la seconde partie des données laser représentant un ou plusieurs nouveaux objets dans la sous-carte et non dans la carte de référence ; et
la détermination du second résultat de correspondance en faisant correspondre la sous-carte avec la seconde partie des données laser.

6. Système (100) selon la revendication 1, dans lequel la détermination, sur la base des un ou plusieurs éléments de contrainte, de la pose cible à l'instant présent inclut :
la détermination d'un changement de pose à un point temporel le plus proche de l'instant présent en optimisant les un ou plusieurs éléments de contrainte ; et
la détermination, sur la base du changement de pose, des données odométriques à l'instant présent et des données odométriques au point temporel, de la pose cible à l'instant présent.

7. Système (100) selon la revendication 1, dans lequel la détermination que les données odométriques sont anormales inclut :
la détermination, sur la base du premier résultat de correspondance, d'un ou plusieurs premiers changements de pose à un ou plusieurs points temporels consécutifs avant l'instant présent ;
la détermination, sur la base des données odométriques, d'un ou plusieurs troisièmes changements de position aux un ou plusieurs points temporels consécutifs ; et
la détermination que les données odométriques sont anormales en réponse à la détermination qu'une différence entre chacun des un ou plusieurs premiers changements de position et l'un des un ou plusieurs troisièmes changements de position à un même point temporel parmi les un ou plusieurs points temporels consécutifs dépasse un seuil de différence.

8. Système (100) selon la revendication 1, dans lequel la détermination que les données odométriques sont anormales inclut :
s'il est déterminé que le premier résultat de correspondance ne satisfait pas à la condition,
la détermination, sur la base du second résultat de correspondance, d'un ou plusieurs deuxièmes changements de pose à un ou plusieurs points temporels consécutifs avant l'instant présent ;
la détermination, à partir des données odométriques, d'un ou plusieurs troisièmes changements de position aux un ou plusieurs points temporels consécutifs ; et
la détermination que les données odométriques sont anormales en réponse à la détermination qu'une différence entre chacun des un ou plusieurs deuxièmes changements de position et l'un des un ou plusieurs troisièmes changements de position à un même point temporel parmi les un ou plusieurs points temporels consécutifs dépasse un seuil de différence.

9. Système (100) de la revendication 1, dans lequel la condition inclut un score du premier résultat de correspondance dépassant un seuil de score et un objet de référence scanné par le radar laser lorsque celui-ci acquiert les données laser, dans lequel le score du premier résultat de correspondance indique un degré de correspondance entre les données laser et la carte de référence.

10. Système (100) selon la revendication 1, dans lequel les données laser incluent une ou plusieurs premières trames dont chacune correspond à un premier horodatage dans une plage de temps entre un instant précédent et l'instant présent ;
le premier résultat correspondant inclut une ou plusieurs premières poses estimées dont chacune correspond à un premier horodatage d'une première trame dans les une ou plusieurs premières trames ; et
le premier élément de contrainte est construit sur la base d'une différence entre la première pose estimée au premier point temporel de la plage de temps et la pose souhaitée au premier point temporel.

11. Système (100) selon la revendication 1, dans lequel les données laser incluent une ou plusieurs secondes trames dont chacune correspond à un second horodatage dans une plage de temps entre un instant précédent et l'instant présent ;
le second résultat correspondant inclut une ou plusieurs secondes poses estimées dont chacune correspond à un second horodatage d'une seconde trames dans les une ou plusieurs secondes trames ; et
le second élément de contrainte est construit sur la base d'une différence entre le second changement de pose estimé au premier point temporel de la plage de temps et le changement de pose souhaité au second point temporel.

12. Système (100) selon la revendication 1, dans lequel
lorsque les données odométriques sont anormales, les éléments de contrainte déterminés sur la base des données odométriques sont supprimés ou non construits dans un modèle d'optimisation ; et
lorsque le premier résultat de correspondance est anormal, les éléments de contrainte déterminés sur la base du premier résultat de correspondance sont supprimés ou non construits dans le modèle d'optimisation.

13. Système (100) selon la revendication 1, dans lequel la détermination que le premier résultat de correspondance ne satisfait pas la condition inclut :
la détermination qu'un score du premier résultat de correspondance est inférieur à un seuil ; et
la détermination que les données laser ne représentent pas un objet de référence.

14. Procédé mis en œuvre sur un dispositif informatique (200) incluant au moins un processeur (210) et au moins un dispositif de stockage (220), le procédé comprenant :
l'obtention de données odométriques acquises par un odomètre d'un sujet mobile à un instant présent ;
l'obtention de données laser d'une scène autour du sujet mobile acquises, à l'instant présent, par un radar laser du sujet mobile ;
l'obtention d'une carte de référence d'une région où se situe la scène ;
la détermination d'un premier résultat de correspondance sur la base de la carte de référence et des données laser ;
la reconstruction d'une sous-carte reflétant la scène à partir des données laser ;
la détermination d'un second résultat de correspondance sur la base de la sous-carte et des données laser ; et
la détermination d'une pose cible du sujet mobile sur la base d'au moins deux des données odométriques, du premier résultat de correspondance ou du second résultat de correspondance, la détermination de la pose cible du sujet mobile incluant :
la détermination d'un ou plusieurs éléments de contrainte, dans lequel
les un ou plusieurs éléments de contrainte incluent au moins deux parmi : un premier élément de contrainte construit sur la base du premier résultat de correspondance ;
un deuxième élément de contrainte construit sur la base du second résultat de correspondance ; ou
un troisième élément de contrainte construit sur la base des données odométriques, dans lequel le premier élément de contrainte est configuré pour contraindre une erreur entre une première pose estimée associée au premier résultat de correspondance et une pose souhaitée à un premier point temporel, le deuxième élément de contrainte est configuré pour contraindre une erreur entre un deuxième changement de pose estimé associé au second résultat de correspondance et un changement de pose souhaité à un second point temporel par rapport à un second point temporel précédent, et le troisième élément de contrainte est configuré pour contraindre une erreur entre un troisième changement de pose estimé correspondant aux données odométriques et un changement de pose d'optimisation au premier point temporel par rapport à un premier point temporel précédent ;
les données odométriques anormales font référence à des données odométriques anormales causées par un dérapage du sujet mobile ou par un défaut d'un odomètre du sujet mobile ;
en réponse à la détermination que les données odométriques sont anormales, les un ou plusieurs éléments de contrainte incluent le premier élément de contrainte et le deuxième élément de contrainte ; et
en réponse à la détermination que le premier résultat de correspondance ne satisfait pas la condition, les un ou plusieurs éléments de contrainte incluent le deuxième élément de contrainte et le troisième élément de contrainte
la détermination, à partir d'un ou plusieurs éléments de contrainte, de la pose cible à l'instant présent.

15. Support de stockage lisible par ordinateur (250) contenant des programmes informatiques, dans lequel les programmes informatiques sont exécutés par un processeur (210) pour mettre en œuvre le procédé incluant des opérations incluant :
l'obtention de données odométriques acquises par un odomètre d'un sujet mobile à un instant présent ;
l'obtention de données laser d'une scène autour du sujet mobile acquises, à l'instant présent, par un radar laser du sujet mobile ;
l'obtention d'une carte de référence d'une région où se situe la scène ;
la détermination d'un premier résultat de correspondance sur la base de la carte de référence et des données laser ;
la reconstruction d'une sous-carte reflétant la scène à partir des données laser ;
la détermination d'un second résultat de correspondance sur la base de la sous-carte et des données laser ; et
la détermination d'une pose cible du sujet mobile sur la base d'au moins deux des données odométriques, du premier résultat de correspondance ou du second résultat de correspondance, la détermination de la pose cible du sujet mobile incluant :
la détermination d'un ou plusieurs éléments de contrainte en déterminant si les données odométriques sont anormales ou en déterminant si le premier résultat de correspondance satisfait à une condition, dans lequel
les un ou plusieurs éléments de contrainte incluent au moins deux parmi : un premier élément de contrainte construit sur la base du premier résultat de correspondance ;
un deuxième élément de contrainte construit sur la base du second résultat de correspondance ; ou
un troisième élément de contrainte construit sur la base des données odométriques, dans lequel le premier élément de contrainte est configuré pour contraindre une erreur entre une première pose estimée associée au premier résultat de correspondance et une pose souhaitée à un premier point temporel, le deuxième élément de contrainte est configuré pour contraindre une erreur entre un deuxième changement de pose estimé associé au second résultat de correspondance et un changement de pose souhaité à un second point temporel par rapport à un second point temporel précédent, et le troisième élément de contrainte est configuré pour contraindre une erreur entre un troisième changement de pose estimé correspondant aux données odométriques et un changement de pose d'optimisation au premier point temporel par rapport à un premier point temporel précédent ;
les données odométriques anormales font référence à des données odométriques anormales causées par un dérapage du sujet mobile ou par un défaut d'un odomètre du sujet mobile ;
en réponse à la détermination que les données odométriques sont anormales, les un ou plusieurs éléments de contrainte incluent le premier élément de contrainte et le deuxième élément de contrainte ; et
en réponse à la détermination que le premier résultat de correspondance ne satisfait pas la condition, les un ou plusieurs éléments de contrainte incluent le deuxième élément de contrainte et le troisième élément de contrainte ;
la détermination, sur la base des un ou plusieurs éléments de contrainte, de la pose cible à l'instant présent.
